# EUROPEAN PATENT APPLICATION

(11) **EP 4 803 747 A1**
(43) Date of publication of application: **09.09.2026**
(21) Application number: 25870254.7
(22) Date of filing: 26.06.2025
(51) Int. Cl.: F04B 37/12, C01B 13/02

(54) **OXYGEN GENERATING DEVICE**

(30) Priority: 27.09.2024 CN 202411360271
(71) Applicant: Qingdao Augreener Electronic Technology Co., Ltd., Qingdao, Shandong 266555 (CN)
(72) Inventor: XIONG, Jiaming, Qingdao, Shandong 266555 (CN); ZHANG, Yufei, Qingdao, Shandong 266555 (CN)
(74) Representative: Wang, Bo
(86) International application number: PCT/CN2025/103841
(87) International publication number: WO 2026/066335

(57) **Abstract**

The present invention provides an oxygen generating device, comprising a housing, and a device chamber and a compressor chamber which are arranged in the housing, and further comprising an air intake module, a heat dissipation air duct, and an exhaust silencing device. The compressor chamber is located below the device chamber and is in communication with the device chamber; the air intake module is arranged on a first side wall of the housing, is configured to allow the entry of cooling airflow, and is configured to supply air to a compressor; the heat dissipation air duct comprises first air inlets arranged on the air intake module, a first air duct connected to the first air inlets and located between a top wall of the housing and a top plate of the device chamber, and a second air duct connected to the first air duct and located between a second side wall of the housing and a second side plate of the device chamber, the second side plate being provided with second air inlets; and the exhaust silencing device is arranged at the bottom of the compressor chamber and internally forms an exhaust silencing chamber in communication with the compressor chamber, a silencing air outlet being arranged at the bottom of the exhaust silencing cavity. The oxygen generating device provided by the present invention has a compact structure, improved heat dissipation effect, and lower noise.

## Description

### TECHNICAL FIELD

The present disclosure relates to the technical field of oxygen generating device.

### BACKGROUND

An oxygen concentrator is a device configured to extract oxygen from air. It is mainly used in the medical field to provide high-purity oxygen to patients requiring additional oxygen supply. Molecular sieve oxygen concentrators are currently commonly used. They comprise two molecular sieves that respectively perform the same cyclic process, thereby achieving continuous gas supply. The working process is as follows: feed air is pressurized by a compressor, then the compressed air enters the molecular sieves through an intake valve. In the molecular sieves, nitrogen is adsorbed, and the outflowing gas is high-purity oxygen.

When the compressor compresses a large amount of filtered air, potential energy of molecules in the compressed air is converted into kinetic energy, and molecules frequently collide with each other, generating heat. If the generated heat is not dissipated in time, it is prone to affect a service life of the oxygen generating device. Currently, a fan is generally provided to dissipate heat for the compressor, a frame structure design inside the housing is relatively complex, an air duct design is also not reasonable, resulting in poor heat dissipation effect and poor sound insulation and noise reduction effect. Consequently, noise generated during operation is very high, and a significant temperature rise also occurs, thereby seriously affecting product performance.

The above information disclosed in this background section is only for enhancement of understanding of the background of the present disclosure. Therefore, it may contain information that does not constitute the prior art known to a person of ordinary skill in the art.

### SUMMARY

An objective of the present disclosure is to provide an oxygen generating device, so as to solve the above-mentioned technical problems in the prior art.

One or more embodiments of the present disclosure provide an oxygen generating device, comprising:
a housing comprising a first sidewall and a second sidewall;
a device chamber disposed within the housing and provided with a second side plate adjacent to the second sidewall;
a compressor chamber disposed within the housing and internally accommodating a compressor, wherein the compressor chamber is located below the device chamber and in communication with the device chamber;
an air intake module disposed on the first sidewall for introducing a cooling airflow into the housing and to supply air to the compressor;
a cooling air duct comprising a first air inlet, a first air duct, a second air duct, and a second air inlet, wherein the first air inlet is disposed on the air intake module for introducing the cooling airflow, the first air duct is connected to the first air inlet and located between a top wall of the housing and a top plate of the device chamber, the second air duct is connected to the first air duct and located between the second sidewall and the second side plate, and the second air inlet is provided on the second side plate for introducing the cooling airflow from the second air duct into the device chamber; and
an exhaust silencing device disposed at a bottom of the compressor chamber, wherein the exhaust silencing device internally forms an exhaust silencing chamber, a silencing air inlet is disposed at a top of the exhaust silencing device to communicate the compressor chamber with the exhaust silencing chamber, and a silencing air outlet is disposed on a bottom of the exhaust silencing device to discharge airflow from the exhaust silencing chamber out of the oxygen generating device.

In some embodiments, the air intake module comprises:
an air intake cavity, which is formed by inwardly recessing the housing;
a mounting cavity, which is formed by inwardly recessing a cavity wall opposite to an open end of the air intake cavity;
a filter cavity, which is detachably located within the mounting cavity; and
an intake pipe head, which is in communication with an air inlet of the compressor and extends into the mounting cavity;
wherein the intake pipe head is connected to the filter cavity, a first filter element is provided in the air intake cavity, and a second filter element is provided in the filter cavity;
the first air inlet is disposed at a bottom of the air intake cavity; and
external air enters the air intake cavity and passes through the first filter element; and a portion of the air then flows into the filter cavity, passes through the second filter element, and enters an oxygen supply pipeline; and the other portion of the air flows into the first air inlet and enters the cooling air duct.

In some embodiments, the air intake module further comprises an air intake cover detachably covering the open end of the air intake cavity, a first air inlet for introducing external air is formed between the air intake cover and a cavity wall of the air intake cavity; a projection of the first air inlet onto the bottom of the air intake cavity is spaced apart from both the filter cavity and the first air inlet, forming a hidden air inlet structure.

In some embodiments, a first circuit board is disposed within the first air duct, the first circuit board is fixedly provided on the top plate of the device chamber; and a plane of the top plate of the device chamber is lower than the first air inlet;
a second circuit board is disposed within the device chamber, and a heat dissipation amount of a plurality of first electronic components disposed on the first circuit board is less than a heat dissipation amount of a plurality of second electronic components disposed on the second circuit board; and
a panel frame is disposed obliquely between the top plate and the second sidewall of the housing, a control panel is mounted on the panel frame, the panel frame is inclined away from the second sidewall in an upward direction; and an inner side of the panel frame serves to guide a flowing airflow.

In some embodiments, a molecular sieve device is disposed inside the housing, the molecular sieve device is located on one side of the device chamber and the compressor chamber; a heat dissipation tube connected to the compressor and configured to deliver compressed gas to the molecular sieve device is provided in the device chamber, and the heat dissipation tube is disposed on an inner side of the second air inlet.

In some embodiments, the exhaust silencing device comprises:
a bottom cover, wherein the silencing air inlet is provided at a top of the bottom cover;
a bottom shell, forming a recessed bottom shell groove, one end of the bottom shell groove forming the silencing air outlet; and
an exhaust hood disposed in the bottom shell groove, wherein one end of the exhaust hood extends to the silencing air outlet, and the other end of the exhaust hood forms a perforated portion;
wherein the bottom cover is connected to the bottom shell and covers the bottom shell groove, a first exhaust silencing chamber in communication with the silencing air inlet is formed between an outer side of the exhaust hood and the bottom cover, and a second exhaust silencing chamber in communication with the silencing air outlet is formed between an inner side of the exhaust hood and the bottom shell.

In some embodiments, the silencing air inlet comprises a first silencing air inlet and a second silencing air inlet respectively proximate to two opposite ends of the bottom cover, the first silencing air inlet is proximate to the silencing air outlet of the bottom shell, the second silencing air inlet is proximate to the perforated portion of the exhaust hood; and an opening area of the first silencing air inlet is larger than an opening area of the second silencing air inlet; and/or
the hollow holes are distributed on a top surface and a side surface of the exhaust hood, a groove gap is formed between the side surface of the exhaust hood and a sidewall of the bottom shell groove, and the groove gap is in communication with the first exhaust silencing chamber; and/or
an exhaust sound-absorbing cotton is provided in at least one of the first exhaust silencing chamber, the second exhaust silencing chamber, or on a top surface of the bottom cover.

In some embodiments, a water-free humidification module is further provided inside the housing, and the water-free humidification module comprises:
a housing body, in which an air inlet chamber and an air outlet chamber are provided;
an air inlet pipe and an air outlet pipe, which are respectively provided on the air inlet chamber and the air outlet chamber, and located at a same end of the housing body;
a humidification conduit, at least a portion of which passes through the air inlet chamber, and all or part of a pipe wall of the humidification conduit located in the air inlet chamber is a water-permeable structure; and
a partition plate, which is provided in the housing body for separating the air inlet chamber and the air outlet chamber, and a through hole for communicating the air inlet chamber and the air outlet chamber is provided on the partition plate.

In some embodiments, the water-free humidification module is located below the air intake module and outside the device chamber, forming a separate compartment; the air inlet pipe and the air outlet pipe are in communication with an air intake pipeline of the oxygen generating device, and the humidification conduit is in communication with an oxygen delivery pipeline of the oxygen generating device; and/or
the air inlet pipe and the air outlet pipe are coaxially arranged and located on a side of the housing body, and an air inlet and an air outlet are respectively provided at a communication location of the air inlet pipe and the air inlet chamber and a communication location of the air outlet pipe and the air outlet chamber; and the through hole and the air inlet pipe are located at two ends of the housing body; and/or
the air outlet chamber is filled with a sound-absorbing cotton or a filter cotton, and the water-permeable structure is a fiber membrane.

In some embodiments, a silencing assembly is provided in the compressor chamber, and the silencing structure comprises:
an intake silencing device, which is provided on a side of the compressor connected to a second air intake pipe, and is provided with a clearance recess for avoiding the second air intake pipe, wherein an intake silencing chamber is formed inside the intake silencing device, and an air inlet and an air outlet that are in communication with the intake silencing chamber are provided, and the air outlet is provided in the clearance recess and is connected to the second air intake pipe; and
a nitrogen silencing device, which is provided on the other side of the compressor, wherein a nitrogen silencing chamber is formed inside the nitrogen silencing device, and a nitrogen inlet and a nitrogen outlet that are in communication with the nitrogen silencing chamber are provided.

Compared with the prior art, the present disclosure has the advantages and positive effects: by providing the device chamber, heat generated by components inside the device chamber is prevented from rapidly diffusing to other regions inside the housing, thereby affecting normal operation of other components. A space inside the housing is separated into a plurality of spaced spaces, which is beneficial for increasing a length of an air duct and improving a number of components that a cooling airflow flows through. Communication between the spaced spaces and communication with the outside are achieved, forming a tortuous and smooth air path, increasing a heat dissipation efficiency for components inside the air duct. By providing the first air duct, after the airflow enters from the first air inlet, it flows between the top wall of the housing and the top plate of the device chamber, which can dissipate heat for components above the top plate of the device chamber, improving a heat dissipation effect. The air intake module facilitates a compact structure arrangement of the oxygen generating device. By providing the exhaust silencing device, it is possible to silence and reduce noise of the cooling airflow discharged from the oxygen generating device.

Other features and advantages of the present disclosure will become clear from the following detailed description of exemplary embodiments of the present disclosure with reference to the accompanying drawings.

### BRIEF DESCRIPTION OF THE DRAWINGS

The accompanying drawings, which are incorporated in and constitute a part of this disclosure, illustrate embodiments of the present disclosure and, together with the description, serve to explain the principles of the present disclosure.
FIG. 1 is a schematic diagram illustrating a structure of an air intake module of an oxygen generating device according to some embodiments of the present disclosure;
FIG. 2 is a schematic diagram illustrating a structure of the air intake module of FIG. 1 in a state where the intake cover is detached;
FIG. 3 is an enlarged view illustrating a structure of an air intake cavity of FIG. 2;
FIG. 4 is a schematic diagram illustrating a structure of the air intake cavity of FIG. 3 in a state where the filter cavity is detached;
FIG. 5 is a schematic diagram illustrating a structure of the air intake cover of FIG. 2;
FIG. 6 is an enlarged view of a region A of FIG. 5;
FIG. 7 is a schematic diagram illustrating a structure of the air intake cover of FIG. 5 from another angle;
FIG. 8 is a cross-sectional view of the air intake module of FIG. 1;
FIG. 9 is an enlarged view of a region B of FIG. 8;
FIG. 10 is a schematic diagram illustrating a structure of a filter cavity;
FIG. 11 is a schematic diagram illustrating a structure of the filter cavity of FIG. 10 from another angle;
FIG. 12 is an exploded view of the filter cavity of FIG. 10;
FIG. 13 is a schematic diagram illustrating a structure of a filter cavity and an intake pipe head in an installation state;
FIG. 14 is a cross-sectional view of the filter cavity and the intake pipe head of FIG. 13;
FIG. 15 is a schematic diagram illustrating a structure of the air intake module of FIG. 1 with a housing removed;
FIG. 16 is an enlarged view of a region C of FIG. 15;
FIG. 17 is a schematic diagram illustrating a structure of the housing;
FIG. 18 is an enlarged view of a mounting groove of FIG. 17;
FIG. 19 is another cross-sectional view of the air intake module of FIG. 1;
FIG. 20 is an enlarged view of an air intake chamber of FIG. 19;
FIG. 21 is an enlarged view of a region D of FIG. 20;
FIG. 22 is a schematic diagram illustrating a structure of a cooling air duct of the oxygen generating device according to some embodiments of the present disclosure;
FIG. 23 is a cross-sectional view of the cooling air duct of FIG. 22;
FIG. 24 is a schematic diagram illustrating a structure of the cooling air duct of FIG. 22 with a front shell of the housing and part of cavity plates of a device chamber in an exploded state;
FIG. 25 is a schematic diagram illustrating a structure of the cooling air duct of FIG. 24 with part of cavity plates of a compressor chamber removed;
FIG. 26 is a schematic diagram illustrating a structure of the cooling air duct of FIG. 22 with the housing removed;
FIG. 27 is a cross-sectional view of the cooling air duct of FIG. 26;
FIG. 28 is another cross-sectional view of the cooling air duct of FIG. 26;
FIG. 29 is an enlarged view of a region E of FIG. 28;
FIG. 30 is a schematic diagram illustrating a structure of a first circuit board and a support column of FIG. 27;
FIG. 31 is a schematic diagram illustrating a structure of the support column of FIG. 30;
FIG. 32 is a schematic diagram illustrating a structure of an exhaust silencing device of the oxygen generating device according to some embodiments of the present disclosure;
FIG. 33 is a schematic diagram illustrating a bottom structure of the exhaust silencing device of FIG. 32;
FIG. 34 is a top view of the exhaust silencing device of FIG. 32;
FIG. 35 is a cross-sectional view taken along line M-M of FIG. 34;
FIG. 36 is a cross-sectional view taken along line N-N of FIG. 34;
FIG. 37 is an exploded view of a bottom shell and an exhaust hood of the exhaust silencing device;
FIG. 38 is an exploded view of a bottom cover and the bottom shell of the exhaust silencing device;
FIG. 39 is a schematic diagram illustrating a structure of the exhaust hood of FIG. 38;
FIG. 40 is another schematic diagram illustrating a structure of the bottom shell and the exhaust hood of the exhaust silencing device;
FIG. 41 is a schematic diagram illustrating a structure of the exhaust hood of FIG. 40;
FIG. 42 is an exploded view of the exhaust silencing device of FIG. 32;
FIG. 43 is a schematic diagram illustrating a structure of the bottom cover and exhaust sound-absorbing cotton of the exhaust silencing device;
FIG. 44 is an exploded view of the bottom cover and the exhaust sound-absorbing cotton of FIG. 43;
FIG. 45 is a schematic diagram illustrating a structure of the bottom cover of the exhaust silencing device;
FIG. 46 is another schematic diagram illustrating a structure of the bottom cover of the exhaust silencing device;
FIG. 47 is an exploded view of a first exhaust sound-absorbing cotton, a perforated plate, and the bottom cover of the exhaust silencing device;
FIG. 48 is a cross-sectional view of a first exhaust sound-absorbing cotton, a perforated plate, and the bottom cover of the exhaust silencing device;
FIG. 49 is a schematic diagram illustrating a bottom structure of an oxygen generating device according to some embodiments of the present disclosure;
FIG. 50 is a schematic diagram illustrating a structure of a compressor cover and an exhaust silencing device of the oxygen generating device according to some embodiments of the present disclosure;
FIG. 51 is an exploded view of the compressor cover and the exhaust silencing device of FIG. 50;
FIG. 52 is a longitudinal cross-sectional view of a compressor chamber of the oxygen generating device according to some embodiments of the present disclosure;
FIG. 53 is a perspective view of the compressor chamber of the oxygen generating device according to some embodiments of the present disclosure;
FIG. 54 is an exploded view of the compressor chamber of the oxygen generating device according to some embodiments of the present disclosure;
FIG. 55 is a schematic diagram illustrating a structure of an intake silencing device of FIG. 54;
FIG. 56 is a schematic diagram illustrating a structure of a nitrogen silencing device of FIG. 54;
FIG. 57 is a transverse cross-sectional view of the compressor chamber of the oxygen generating device according to some embodiments of the present disclosure;
FIG. 58 is a schematic diagram illustrating a structure of a water-free humidification module of the oxygen generating device according to some embodiments of the present disclosure;
FIG. 59 is a cross-sectional view of the water-free humidification module of FIG. 58;
FIG. 60 is a schematic diagram illustrating a structure of the water-free humidification module of FIG. 59 with a humidification conduit removed;
FIG. 61 is a vertical cross-sectional view of a housing body of the water-free humidification module of the oxygen generating device according to some embodiments of the present disclosure;
FIG. 62 is a schematic diagram of the water-free humidification module of FIG. 58 from another angle;
FIG. 63 is another schematic diagram illustrating a structure of a water-free humidification module of the oxygen generating device according to some embodiments of the present disclosure;
FIG. 64 is a cross-sectional view of a housing body of FIG. 63;
FIG. 65 is a cross-sectional view of a water-free humidification module of the oxygen generating device according to some embodiments of the present disclosure;

In the drawings, the reference numerals and their corresponding component names are as follows:
100: oxygen generating device;
10: housing; 11: first sidewall; 12: second sidewall; 13: top wall;
14: air outlet chamber; 141: air outlet;
15: air intake cavity; 152: cavity bottom; 153: slot; 155: first air inlet; 1551: air inlet side; 1552: air outlet side; 1553: arcuate air inlet surface; 156: first filter element;
16: air intake cover; 161: first air intake opening; 162: cover body; 1621: notch; 163: cover rim; 1631: claw; 164: limiting rib;
17: filter cavity; 170: cavity body; 171: first cavity wall; 172: second cavity wall; 173: second air intake opening; 174: guide rib; 175: clearance groove; 1751: first groove wall; 17511: air outlet hole; 17512: air outlet nozzle; 176: support and limiting portion; 1761: support column; 177: second filter element; 1771: turning portion; 178: filter frame; 1781: outer flange;
18: mounting cavity; 181: first groove wall; 182: second groove wall; 1811: first clearance opening; 1812: mounting notch; 1813: limiting groove;
19: panel frame;
20: device chamber;
21: first side plate; 211: fixing frame; 2111: support portion; 2112: fixing portion;
22: second side plate; 221: second air inlet;
23: top plate; 231: reserved opening; 232: supporting edge;
25: fan; 27: second circuit board; 28: support column; 281: column body; 282: snap-fitting limiting top cap; 2821: connecting portion; 2822: claw; 28221: claw portion; 28222: abutting portion; 283: elastic plate; 284: snap-fitting limiting bottom cap; 29: first circuit board; 291: first fixing hole;
30: compressor chamber;
33: chamber top; 331: third air inlet; 341: fourth air inlet;
35: compressor; 351: heat dissipation tube;
36: intake pipe head; 361: pipe head portion; 362: joint portion; 363: mounting plate; 364: limiting column; 365: first connecting portion; 366: second connecting portion;
37: first air intake pipe;
38: compressor cover; 381: cover top plate; 382: cover side plate; 384: cover sound-absorbing layer;
39: second air intake pipe;
40: cooling air duct; 41: first air duct; 42: second air duct; 43: third air duct;
50: silencing unit;
51: bottom cover; 510: silencing air inlet; 511: first silencing air inlet; 512: second silencing air inlet; 513: bottom cover top plate; 514: bottom cover side plate;
52: bottom shell; 521: bottom shell groove; 522: silencing air outlet; 523: first positioning groove; 524: second positioning groove;
53: exhaust hood; 531: perforated portion; 532: upper hood plate; 533: side hood plate; 534: overlapping edge;
54: first exhaust silencing chamber;
55: second exhaust silencing chamber;
56: groove gap;
57: exhaust sound-absorbing cotton; 571: first exhaust sound-absorbing cotton; 572: second exhaust sound-absorbing cotton; 573: third exhaust sound-absorbing cotton; 574: fourth exhaust sound-absorbing cotton; 575: fifth exhaust sound-absorbing cotton;
58: silencing perforated plate;
60: water-free humidification module;
61: housing body; 611: air inlet chamber; 612: air outlet chamber; 613: partition plate; 6131: partition plate protrusion; 614: through opening; 615: perforated plate; 616: air inlet cavity; 6161: air inlet nozzle; 617: air outlet cavity; 6171: air outlet nozzle; 618: housing body bottom wall; 6181: protruding groove; 619: housing body wall; 6191: housing body air inlet; 6192: housing body air outlet;
62: air inlet pipe;
63: air outlet pipe;
64: humidification conduit;
70: nitrogen silencing device; 71: nitrogen inlet; 72: nitrogen outlet; 73: grid plate; 74: nitrogen silencing sound-absorbing cotton; 75: nitrogen silencing partition plate;
80: intake silencing device; 81: air inlet; 82: air outlet; 83: clearance recess; 84: intake silencing sound-absorbing cotton; 85: intake silencing partition plate.

### DETAILED DESCRIPTION

In order to make the objectives, technical solutions, and advantages of the embodiments of the present disclosure clearer, the technical solutions in the embodiments of the present disclosure will be clearly and completely described hereinafter in conjunction with the accompanying drawings.

In the description of the present disclosure, it should be noted that the terms "upper", "lower", "left", "right", "inner", "outer", or the like, indicate orientations or positional relationships based on the positional relationships shown in the accompanying drawings. The terms are merely for ease of describing the present disclosure and simplifying the description, and do not indicate or imply that the device or element referred to must have a specific orientation or be constructed and operated in a specific orientation. Therefore, these terms shall not be construed as a limitation to the present disclosure. In addition, the terms "first", "second", and "third" are used merely for descriptive purposes and shall not be construed as indicating or implying relative importance. Features defined with "first" and "second" may explicitly or implicitly include one or a plurality of such features. In the description of the present disclosure, the meaning of "a plurality of" refers to two or more, unless otherwise explicitly and specifically defined.

In the present disclosure, the terms "equal", "same", or the like, are not strictly limited in a mathematical and/or geometrical sense, but also include errors that are understandable to those skilled in the art and permissible in manufacturing or use, or the like.

In the present disclosure, unless otherwise explicitly specified and defined, the terms "mounting", "connected", "coupled", "fixed", or the like, shall be broadly understood. For example, these terms may refer to a fixed connection, a detachable connection, or an integral formation; a mechanical connection or an electrical connection; a direct connection or an indirect connection through an intermediate medium; an internal communication between two elements or an interaction between two elements. For those skilled in the art, the specific meanings of the above terms in the present disclosure may be understood based on specific situations.

In the present disclosure, unless otherwise explicitly specified and defined, a first feature being "above" or "below" a second feature may include the first and second features being in direct contact and may also include the first and second features not being in direct contact but being in contact through another feature between them. Moreover, a first feature being "on", "above", and "over" a second feature include a first feature being directly above and obliquely above the second feature, or merely indicate that the horizontal height of the first feature is higher than that of the second feature. A first feature being "below", "under", and "underneath" a second feature include a first feature being directly below and obliquely below the second feature, or merely indicate that the horizontal height of the first feature is lower than that of the second feature.

The following disclosure provides a plurality of different embodiments or examples for implementing different structures of the present disclosure. To simplify the disclosure of the present disclosure, components and settings of specific examples are described hereinafter. Of course, they are merely examples and are not intended to limit the present disclosure. In addition, the present disclosure may repeat reference numerals and/or reference letters in different examples. Such repetition is for the purpose of simplification and clarity and does not itself indicate a relationship between the various embodiments and/or settings discussed. Furthermore, the present disclosure provides examples of various specific processes and materials, but those skilled in the art can realize the application of other processes and/or the use of other materials.

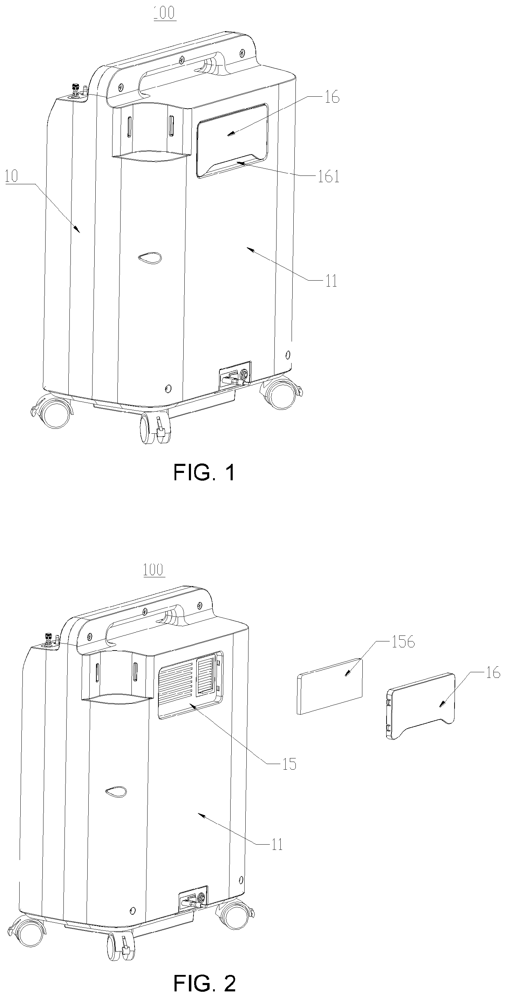

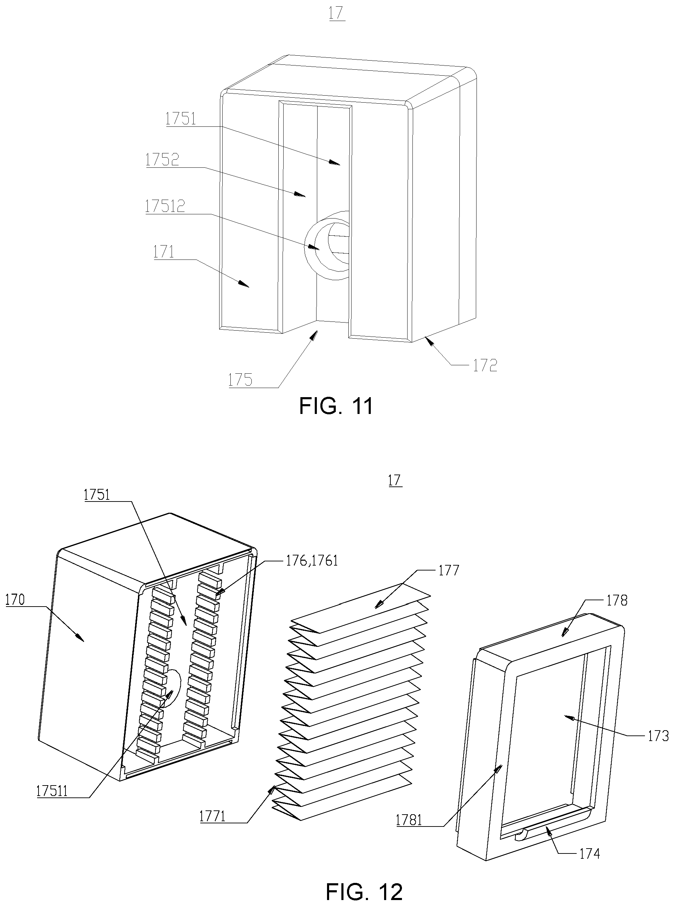

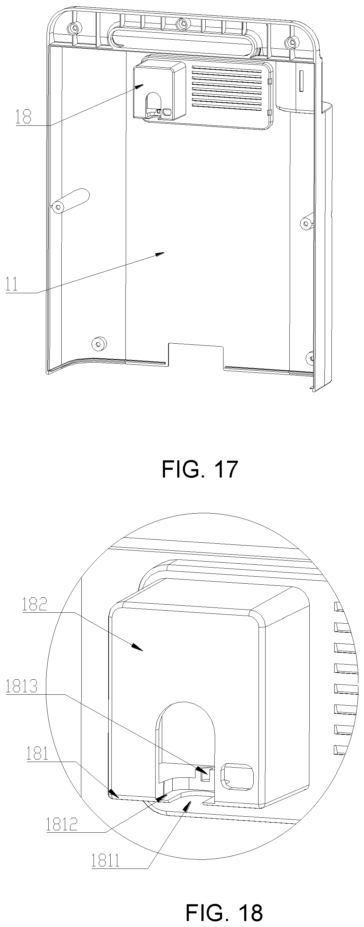

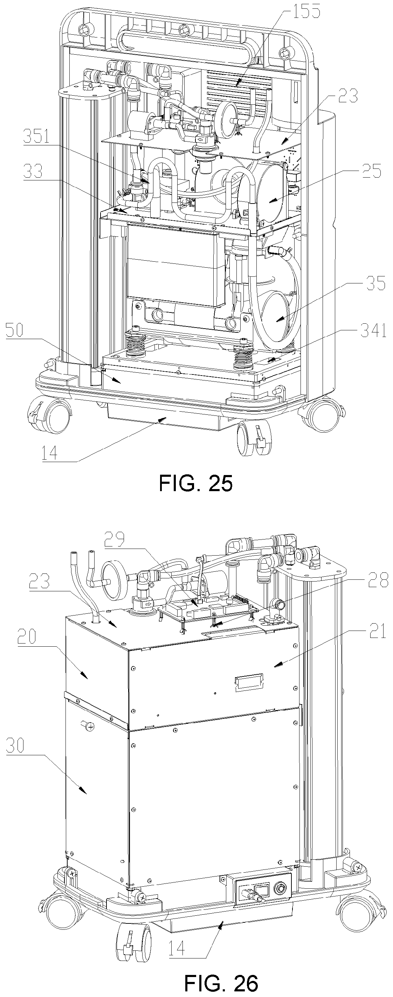

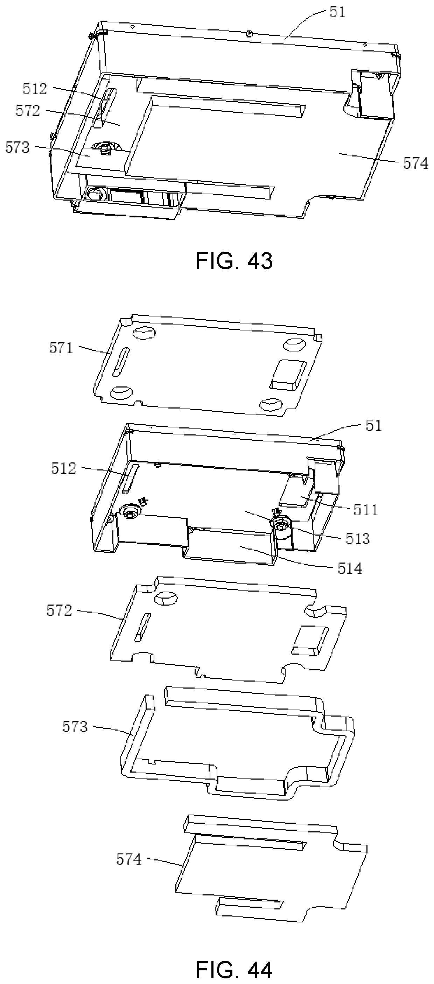

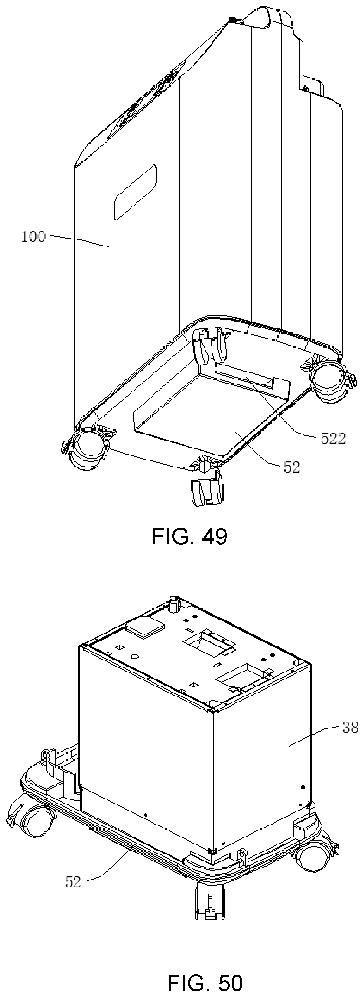

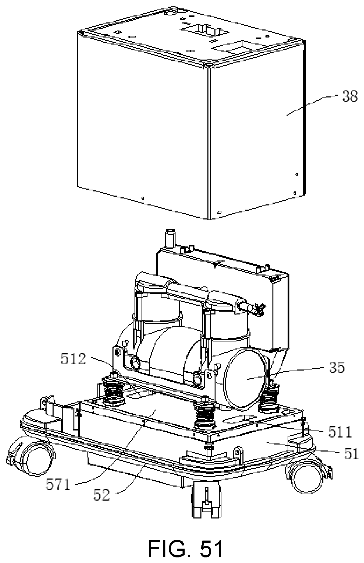

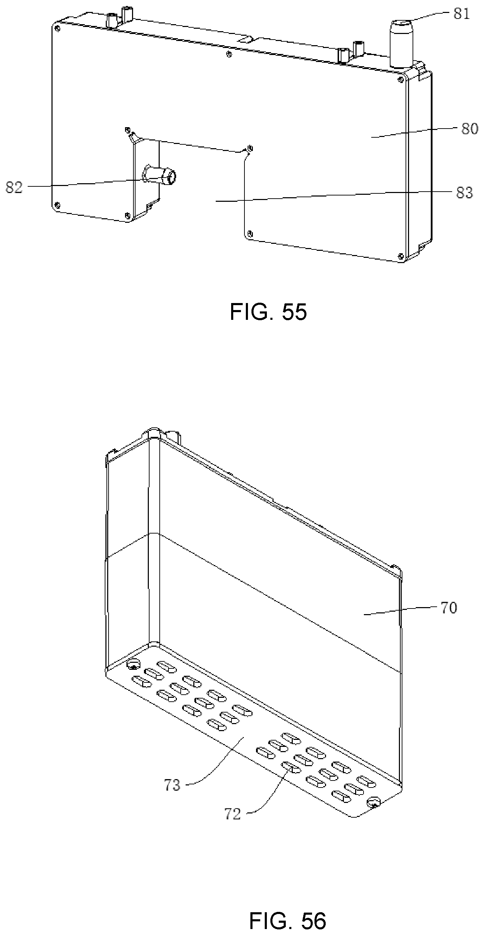

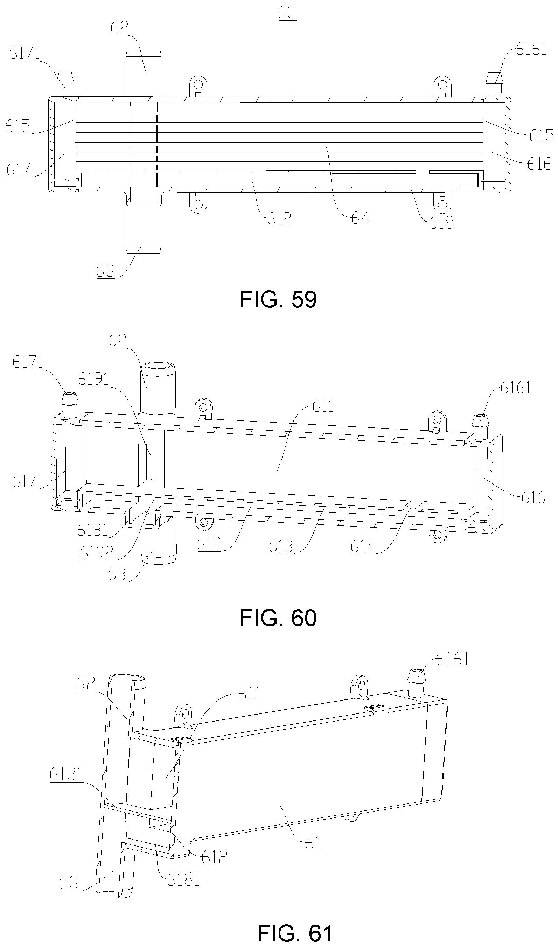

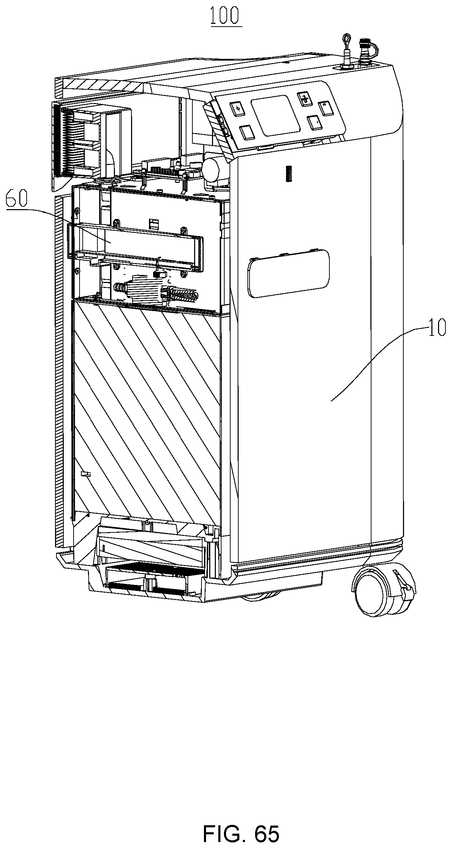

Some embodiments of the present disclosure provide an oxygen generating device. As shown in FIGs. 1-65, the oxygen generating device 100 comprises a housing 10, a device chamber 20 disposed within the housing 10, and a compressor chamber 30 disposed within the housing 10. The device chamber 20 is located on an upper side of the compressor chamber 30. The compressor chamber 30 internally accommodates a compressor 35. By providing the device chamber 20 and the compressor chamber 30, the heat generated by components inside the compressor chamber 30 and the device chamber 20 is prevented from rapidly diffusing to other areas within the housing of the oxygen generating device, so as not to affect the normal operation of other components.

The oxygen generating device 100 is provided with an air intake module, and the air intake module is configured to introduce external air into the oxygen generating device 100. After filtration, the external air may be supplied to the compressor 35 or may be used for heat dissipation.

The housing 10 includes a first sidewall 11 and a second sidewall 12, and the first sidewall 11 and the second sidewall 12 are disposed opposite to each other. The device chamber 20 is provided with a second side plate 22 adjacent to the second sidewall 12. The compressor chamber 30 is located below the device chamber 20 and is in communication with the device chamber 20. The air intake module is disposed on the first sidewall 11, and the air intake module is configured to introduce a cooling airflow into the housing 10 and to supply air to the compressor 35.

A cooling air duct 40 is disposed within the housing 10. The cooling air duct 40 includes a first air inlet 155, a first air duct 41, a second air duct, and a second air inlet 221. The first air inlet 155 is disposed on the air intake module and configured to introduce the cooling airflow; the first air duct 41 is connected to the first air inlet 155 and located between a top wall of the housing 10 and a top plate of the device chamber 20; the second air duct 42 is connected to the first air duct 41 and located between the second sidewall 12 and the second side plate 22; and the second air inlet 221 is provided on the second side plate 22 and configured to introduce the cooling airflow from the second air duct 42 into the device chamber 20.

An exhaust silencing device is disposed at a bottom of the compressor chamber 30, and the exhaust silencing device internally forms an exhaust silencing chamber. A silencing air inlet 510 is disposed at a top of the exhaust silencing device to communicate the compressor chamber 30 with the exhaust silencing chamber, and a silencing air outlet 522 is disposed on a bottom of the exhaust silencing device to discharge the airflow from the exhaust silencing chamber out of the oxygen generating device 100.

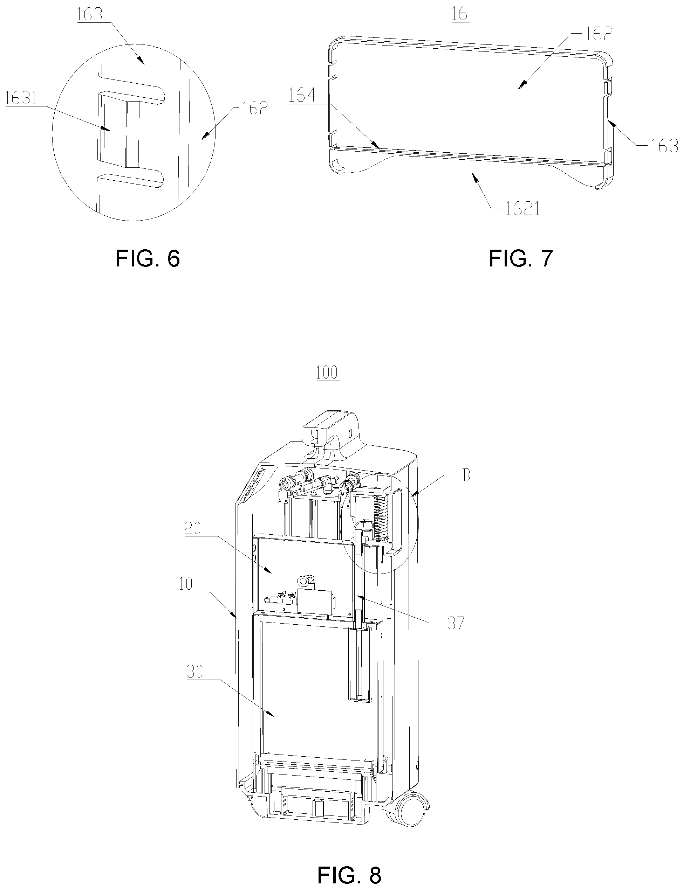

As shown in FIGs. 8-9, the air intake module of the oxygen generating device 100 includes an air intake cavity 15, a mounting cavity 18, a filter cavity 17, an intake pipe head 36, a first filter element 156, and a second filter element 177. The air intake cavity 15 is formed by inwardly recessing the first sidewall 11 of the housing 10 of the oxygen generating device 100. An outer end of the air intake cavity 15 is an open end. The mounting cavity 18 is formed by inwardly recessing a cavity wall opposite to the open end of the air intake cavity 15, that is, the mounting cavity 18 is formed by extending from a bottom of the air intake cavity 15 in a direction away from the air intake cavity 15. The filter cavity 17 is detachably located within the mounting cavity 18, and the mounting cavity 18 is configured to accommodate the filter cavity 17. The intake pipe head 36 is in communication with an air inlet of the compressor 35 and extends into the mounting cavity 18. The intake pipe head 36 is connected to the filter cavity 17. The first filter element 156 is provided in the air intake cavity 15, and the second filter element 177 is provided in the filter cavity 17. The air intake module is disposed within the oxygen generating device 100, thereby facilitating a compact structural arrangement, reducing space occupation, and enhancing market competitiveness. The detachable arrangement of the filter cavity 17 allows for overall replacement of the filter cavity 17, thereby facilitating an improvement in replacement efficiency. The provision of the first filter element 156 and the second filter element 177 facilitates an improvement in the filtration accuracy. Furthermore, the arrangement of the air intake cavity 15 and the filter cavity 17 allows the first filter element 156 and the second filter element 177 to be respectively located in two cavities, which can achieve replacement of one filter element as needed, and diversion of gas as needed. The filtration accuracy of the second filter element 177 is greater than the filtration accuracy of the first filter element 156. Airflow flowing out of the air intake cavity 15 enters the second filter element 177 for re-filtration.

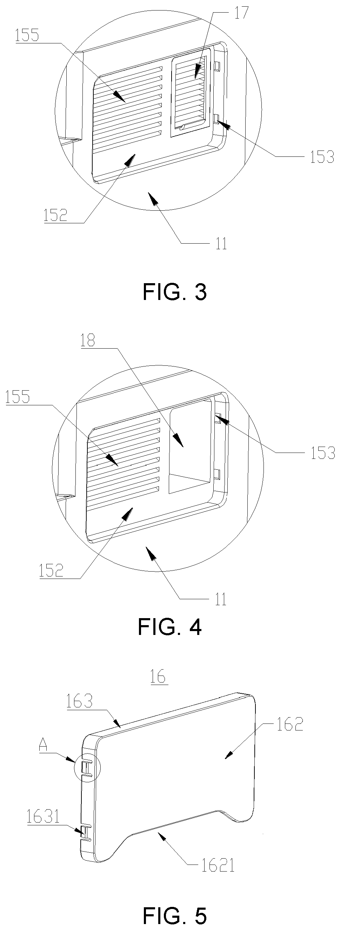

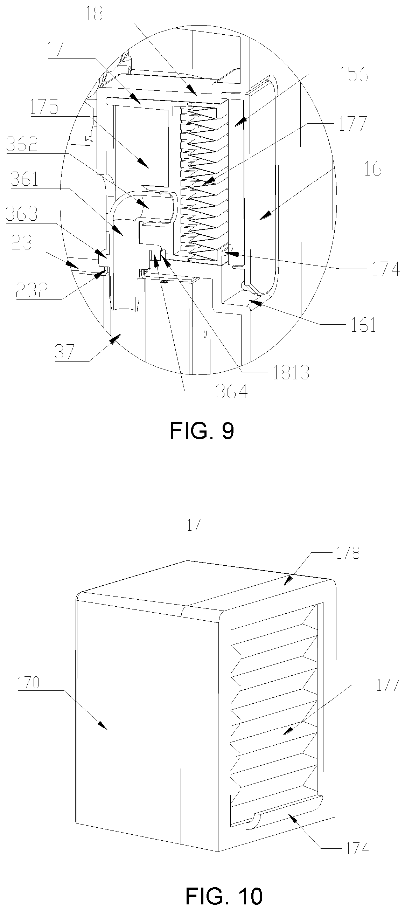

In some embodiments of the present disclosure, as shown in FIG. 3, a first air inlet 155, which is configured for the cooling airflow to pass through, is disposed at the bottom of the air intake cavity 15. External air enters the air intake cavity 15 and passes through the first filter element 156. Subsequently, a portion of the air flows into the filter cavity 17, and after passing through the second filter element 177, enters an oxygen supply pipeline. Another portion of the air flows into the first air inlet 155 and enters the cooling air duct 40. The oxygen supply pipeline supplies air to the compressor 35. That is, the air intake cavity 15 is shared by the oxygen supply pipeline and the cooling air duct 40, which, on one hand, facilitates structural simplification and reduces the number of components; and on the other hand, facilitates a reduction of air inlets on an outer surface of the oxygen generating device 100, thereby improving the aesthetic quality. In some embodiments of the present disclosure, as shown in FIG. 9, the intake pipe head 36 has a pipe head portion 361 and a joint portion 362 that bends from an upper end of the pipe head portion 361 and extends towards an open end of the mounting cavity 18. When the filter cavity 17 is installed inward into the mounting cavity 18, the installation of the filter cavity 17 and the joint portion 362 can be simultaneously achieved. The filter cavity 17 enters the mounting cavity 18 inwardly from the open end of the mounting cavity 18 and moves inwardly into position, thereby achieving fixed installation. That is, an axial direction of the joint portion 362 is an assembling and disassembling direction of the filter cavity 17. When the filter cavity 17 is assembled or disassembled, the intake pipe head 36 and the filter cavity 17 can be simultaneously installed or detached. The detachable arrangement of the filter cavity 17 allows that when the second filter element is to be replaced, the filter cavity 17 may be directly replaced, thereby facilitating an improvement in the efficiency of replacement operations. The arrangement that an axial direction of the joint portion 362 is an assembling and disassembling direction of the filter cavity 17 ensures that when the filter cavity 17 is installed into the mounting cavity 18, it moves inwardly along the axial direction of the joint portion 362. After the filter cavity 17 is installed in place, the installation of the intake pipe head 36 and the filter cavity 17 can be simultaneously completed, thereby saving an installation operation of the intake pipe head 36 and the filter cavity 17 and improving installation efficiency.

In some embodiments of the present disclosure, as shown in FIGs. 2-4, the air intake module further includes an air intake cover 16 detachably covering the open end of the air intake cavity 15. A first air intake opening 161 for introducing external air is formed between the air intake cover 16 and a cavity wall of the air intake cavity 15. By providing the air intake cavity 15 and the air intake cover 16, a hidden air inlet structure is formed, thereby facilitating an improvement in the aesthetic quality of the oxygen generating device. Furthermore, the air intake module is disposed within the oxygen generating device 100, thereby facilitating a compact structural arrangement, reducing space occupation, and enhancing market competitiveness. A first filter element 156 is provided in an air intake cavity 15 and is configured to filter external incoming air, thereby reducing the entry of impurities such as dust carried in the air into the housing and ensuring the cleanliness of the airflow entering the housing 10. External air enters the air intake cavity 15 through the first air intake opening 161, and the first air intake opening 161 is disposed near a groove wall, thereby causing the airflow, after entering the air intake cavity 15, to turn and flow towards the first air inlet 155 and the filter cavity 17, which facilitates an increase in an air path length within the air intake cavity 15 and an increase in the number of bends in the air path, thereby achieving a noise reduction effect.

In some embodiments of the present disclosure, a projection of the first air intake opening 161 onto the bottom of the air intake cavity 15 is spaced apart from both the filter cavity 17 and the first air inlet 155, thereby forming the hidden air inlet structure. From the appearance, only the first air intake opening 161 is visible. Under normal circumstances, the filter cavity 17 and the first air inlet 155 cannot be seen from the first air intake opening 161 when looking inward, thereby ensuring the aesthetic quality and forming the hidden air inlet structure.

In some embodiments of the present disclosure, as shown in FIGs. 5 to 7, the air intake cover 16 has the cover body 162 that matches the open end of the air intake cavity 15, and a notch 1621 is provided at the edge of the cover body 162. The first air intake opening 161 is formed between the notch 1621 and the cavity wall of the air intake cavity 15. By providing the notch 1621 to form the first air intake opening 161, it can ensure that the cover body 162 matches the open end of the air intake cavity 15, facilitating the manufacturing and forming of the notch 1621, thereby simplifying the manufacturing process.

In some embodiments of the present disclosure, the air intake cover 16 has a cover body 162, a cover rim 163 extending inwardly from an edge of the cover body 162, and a limiting rib 164 extending inwardly from the cover body 162. The cover rim 163 and the limiting rib 164 are disposed around the outer side of the first filter element 156, that is, the cover rim 163 and the limiting rib 164 are disposed around the circumference of the first filter element 156, thereby achieving a limitation of the first filter element 156. The outer side of the first filter element 156 is defined with reference to the direction toward a center of the first filter element 156 as the inner side.

In some embodiments of the present disclosure, the air intake cover 16 is detachably disposed within the air intake cavity 15. A snap-fitting structure is provided between the air intake cover 16 and the air intake cavity 15, thereby causing the air intake cover 16 to be snap-fitted and fixed within the air intake cavity 15 and facilitating convenient assembling and disassembling operations of the air intake cover 16. A slot 153 is provided on a sidewall of the air intake cavity 15, and a claw 1631 matching the slot 153 is provided on the cover rim 163. When the air intake cover 16 is inwardly installed into the air intake cavity 15, the claw 1631 is snap-fitted and fixed with the slot 153.

In some embodiments of the present disclosure, an inwardly extending dimension of the cover rim 163 is matched with the depth of the air intake cavity 15, and an inner end of the cover rim 163 abuts against a cavity bottom 152 of the air intake cavity 15. This facilitates defining the in-position installation of the cover rim 163 without requiring a dedicated limiting structure, which is beneficial for structural simplification; and it also increases the contact area between the cover rim 163 and the intake cavity 15, thereby enhancing stability after installation.

In some embodiments of the present disclosure, referring to FIGs. 9-10, an outwardly extending guide rib 174 is provided in the filter cavity 17, the guide rib 174 is configured to prevent airflow from entering the filter cavity 17 through a gap between the first filter element 156 and the filter cavity 17. By providing the guide rib 174, the airflow entering from the first air intake opening 161 is guided into the first filter element 156 for filtration, thereby ensuring the quality of the gas flowing into the filter cavity 17. Preferably, the guide rib 174 abuts against the first filter element 156, and the guide rib 174 extends in a direction towards the first filter element 156. The guide rib 174 serves to guide the airflow, and also provides a limiting function for the first filter element 156, thereby preventing the first filter element 156 from moving inwardly.

In some embodiments of the present disclosure, the guide rib 174 extends arcuately in a direction towards the first filter element 156 and away from the first air intake opening 161, and the guide rib 174 is an outwardly convex arcuate rib structure. The arcuate configuration of the guide rib 174 is conducive to smooth gas flow and reduces airflow resistance. The external air entering from the first air intake opening 161 reaches the air intake cavity 15. A portion of the external air directly enters the first filter element 156, and the other portion of the external air impinges on the guide rib 174; thereafter, the other portion of the external air flows along the guide rib 174 and enters the first filter element 156.

In some embodiments of the present disclosure, the air intake cover 16 comprises the cover body 162 and the limiting rib 164 extending inwardly from the cover body 162, the limiting rib 164 is configured to limit movement of the first filter element 156 towards the first air intake opening 161, and the limiting rib 164 is located between the first air intake opening 161 and the guide rib 174. The provision of the limiting rib 164 causes the external air entering from the first air intake opening 161 to be blocked by the limiting rib 164, thereby causing a greater amount of the airflow in the air intake cavity 15 to impinge on the guide rib 174, forming a bending of the airflow within the air intake cavity 15, which is conducive to lengthening the airflow path, increasing a path length of the airflow within the first filter element 156, and improving the filtration effect.

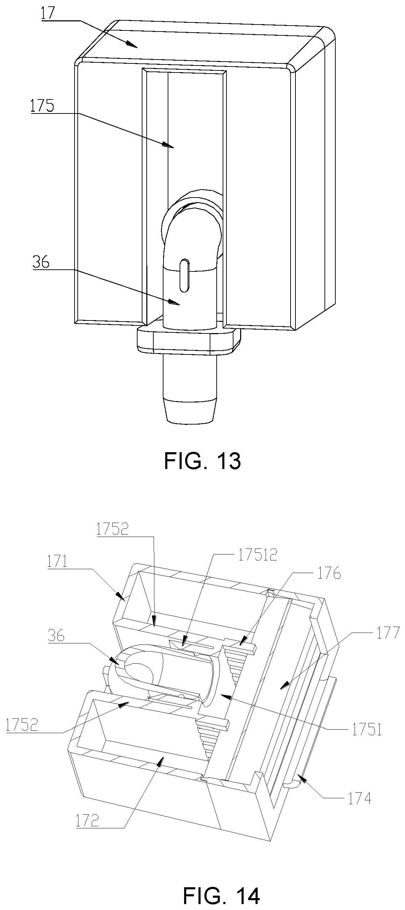

In this embodiment, referring to FIGs. 1 and 13, a cavity wall of the filter cavity 17 is inwardly recessed to form the clearance groove 175, the clearance groove 175 is configured to provide clearance for the intake pipe head 36, and the intake pipe head 36 extends into the clearance groove 175, thereby facilitating the compact structural arrangement and reduced occupied space. A groove wall of the clearance groove 175 is provided therethrough with an air outlet hole 17511 matching the intake pipe head 36, and one end of the intake pipe head 36 is connected and mounted at the air outlet hole 17511. By providing the clearance groove 175, the intake pipe head 36 extends into the clearance groove 175, thereby facilitating the compact structural arrangement of the filter cavity 17 and the intake pipe head 36 and reduced occupied space. The filter cavity 17 is disposed within the oxygen generating device 100, achieving an integrated arrangement, thereby preventing an increase in occupied space by the oxygen generating device 100. The detachable arrangement of the filter cavity 17 allows the filter cavity 17 to be directly replaced when the second filter element 177 needs to be replaced, which is conducive to improving the efficiency of the replacement operation and ensuring the in-position installation of the second filter element 177.

In some embodiments of the present disclosure, the air outlet hole 17511 is disposed opposite to the air inlet end of the filter cavity 17, and the air inlet end of the filter cavity 17 is enclosed to form the second air intake opening 173; that is, the air outlet hole 17511 and the second air intake opening 173 are disposed opposite to each other. A direction of the airflow entering from the second air intake opening 173 is consistent with an axial direction of the air outlet hole 17511, thereby facilitating the airflow within the filter cavity 17 to quickly and efficiently reach the air outlet hole 17511. To facilitate the installation of the intake pipe head 36 and the air outlet hole 17511, the air outlet nozzle 17512 extending into the clearance groove 175 is provided along the air outlet hole 17511, or in other words, the air outlet nozzle 17512 extending away from the air inlet end of the filter cavity 17 is provided along the air outlet hole 17511, and the air outlet nozzle 17512 is sealingly connected to the intake pipe head 36. By providing the air outlet nozzle 17512, a contact area between the intake pipe head 36 and the filter cavity 17 is increased, and an axial contact dimension of the air outlet hole 17511 is increased, which is conducive to increasing the sealing performance and the fixing stability of the connection between the intake pipe head 36 and the air outlet nozzle 17512.

In some embodiments of the present disclosure, the intake pipe head 36 comprises the pipe head portion 361 and the joint portion 362 bent and extending from an upper end of the pipe head portion 361, and the joint portion 362 is sealingly arranged with the air outlet nozzle 17512. The joint portion 362 is located within the air outlet nozzle 17512. A circumferential sealing groove is provided on an outer side of the joint portion 362, and a sealing ring is located at the sealing groove, thereby achieving the sealing between the joint portion 362 and the air outlet nozzle 17512.

In some embodiments of the present disclosure, the filter cavity 17 comprises the first cavity wall 171 disposed opposite to the air inlet end, and the second cavity wall 172 connected to the first cavity wall 171, and the intake pipe head 36 extends into the clearance groove 175 from a direction of the second cavity wall 172. The clearance groove 175 is formed on the first cavity wall 171 and the second cavity wall 172. In this embodiment, the air inlet end of the filter cavity 17 is located at the rear end of the filter cavity 17, the first cavity wall 171 is the front cavity wall of the filter cavity 17, the second cavity wall 172 is the bottom cavity wall of the filter cavity 17, and the intake pipe head 36 extends upwardly from below into the filter cavity 17.

In some embodiments of the present disclosure, referring to FIGs. 9-14, the filter cavity 17 is provided with a support and limiting portion 176 abutting against an inner side of the second filter element 177, and the support and limiting portion 176 is connected to the clearance groove 175. The support and limiting portion 176 is extended along the clearance groove 175 towards the second filter element 177. The second filter element 177 is configured to filter the gas flowing into the filter cavity 17, and the support and limiting portion 176 is configured to achieve a limitation on an inner side of the second filter element 177.

In some embodiments of the present disclosure, the support and limiting portion 176 is configured as a plurality of support columns 1761 arranged at intervals, extending from the clearance groove 175 towards the air inlet end, the plurality of support columns 1761 are parallelly arranged in a vertical direction, and one or more support and limiting portions 176 may be provided. The second filter element 177 is a folded filter paper structure. The second filter element 177 has a plurality of turning portions 1771 capable of extending into gaps between two adjacent support columns 1761, thereby achieving the limitation of the second filter element 177 in an inner-outer direction and uniform distribution in the vertical direction.

In some embodiments of the present disclosure, the filter cavity 17 comprises a cavity body 170 and a filter frame 178 disposed around an outer side of the second filter element 177, the filter frame 178 is detachably provided on the cavity body 170, and after the filter cavity 17 is detached, the second filter element 177 can be replaced by detaching the filter frame 178. An edge of the filter frame 178 is provided with the outer flange 1781 configured to limit the second filter element 177. The outer flange 1781 is enclosed to form a second air intake opening 173.

In some embodiments of the present disclosure, the second filter element 177 is located on an outer side of the air outlet hole 17511, and the second filter element 177 and the air outlet hole 17511 are spaced apart. The clearance groove 175 has a first groove wall 1751 in which the air outlet hole 17511 is formed. The first groove wall 1751 is arranged in parallel with the second filter element 177, and the second filter element 177 and the first groove wall 1751 are spaced apart and enclose to form a gas supply chamber. Within the filter cavity 17, the gas filtered by the second filter element 177 enters the gas supply chamber. The gas within the gas supply chamber can form a stable airflow, which is then supplied to the air outlet hole 17511, thereby facilitating providing the gas supplied to the intake pipe head 36 with stable pressure and smooth flow, which is conducive to the operation of the compressor.

In some embodiments of the present disclosure, referring to FIGs. 9, 17, and 18, the first clearance opening 1811 configured to provide clearance for the intake pipe head 36 is provided on a first groove wall 181 of the mounting cavity 18. By providing the first clearance opening 1811, the intake pipe head 36 extends into the mounting cavity 18 through the first clearance opening 1811. The first groove wall 181 is the lower groove wall of the mounting cavity 18. The intake pipe head 36 comprises the pipe head portion 361 and the mounting plate 363 provided on an outer side of the pipe head portion 361. The mounting notch 1812 configured to accommodate the mounting plate 363 is provided on the inner side of the first clearance opening 1811, and the mounting plate 363 is located within the mounting notch 1812. The provision of the mounting plate 363 and the mounting notch 1812 causes the intake pipe head 36 to be limited within the mounting cavity 18, thereby achieving the limitation of the intake pipe head 36 and restricting an outward movement of the intake pipe head 36. Moreover, by connecting both ends of the intake pipe head 36 to the filter cavity 17 and the air intake pipe, firm and stable installation of the intake pipe head 36 is achieved. The mounting plate 363 is located within the mounting notch 1812, which can limit downward movement and a circumferential movement of the intake pipe head 36.

In some embodiments of the present disclosure, the first clearance opening 1811 is a U-shaped notch, and an upper end surface of the mounting plate 363 is flushly arranged with an upper end surface of the first groove wall 181, such that after the intake pipe head 36 is installed, an inner side of the first groove wall 181 of the mounting cavity 18 is flushly arranged, and the pipe head 361 extends into the mounting cavity 18, which is conducive to the installation operation of the filter cavity 17.

In some embodiments of the present disclosure, the intake pipe head 36 comprises the limiting column 364 and a first connecting portion 365 connecting the limiting column 364 and the pipe head portion 361; a limiting groove 1813 matching the limiting column 364 is provided on the first recess wall 181, and the limiting column 364 is located within the limiting groove 1813. The limiting column 364 is configured to limit movement of the intake pipe head 36 towards an open end of the first clearance opening 1811. The limiting column 364 is located on a rear side of the pipe head portion 361, and a front side of the first clearance opening 1811 is the open end; that is, the limiting column 364 is mainly configured to limit a forward movement of the intake pipe head 36. Certainly, the cooperation of the limiting column 364 and the limiting groove 1813 can limit movement of the intake pipe head 36 in directions other than upward. The limiting column 364 is installed downwardly from above into the limiting groove 1813.

In some embodiments of the present disclosure, the limiting column 364 is located at an outer end of the first connecting portion 365, and the limiting column 364 is arranged axially parallel to the pipe head portion 361; one end of the limiting groove 1813 away from the first groove wall 181 is an insertion end for the installation of the limiting column 364. The intake pipe head 36 is installed from above, such that the air intake pipe is connected to a lower end of the pipe head 361, and simultaneously the limiting column 364 is installed into the limiting groove 1813.

In some embodiments of the present disclosure, the intake pipe head 36 further comprises a second connecting portion 366 connected between the mounting plate 363 and the first connecting portion 365, the second connecting portion 366 is spaced apart from the limiting column 364, and the second connecting portion 366 is connected to the pipe head portion 361. The provision of the second connecting portion 366 is configured to support the first connecting portion 365 and increase structural strength. A second clearance opening connected to the first clearance opening 1811 is provided on a second groove wall 182 of the mounting cavity 18. The clearance groove 175 is located on an inner side of the first clearance opening 1811 and the second clearance opening.

In some embodiments of the present disclosure, the filter cavity 17 is provided with the inwardly recessed clearance groove 175, the clearance groove 175 is configured to provide clearance for the intake pipe head 36, and the intake pipe head 36 extends into the clearance groove 175. The provision of the clearance groove 175 is conducive to the compact structural arrangement and reduced occupied space. Furthermore, during a loading and unloading process of the filter cavity 17 along the axial direction of the joint portion 362, clearance for the intake pipe head 36 is achieved. The clearance groove 175 is located above the first clearance opening 1811.

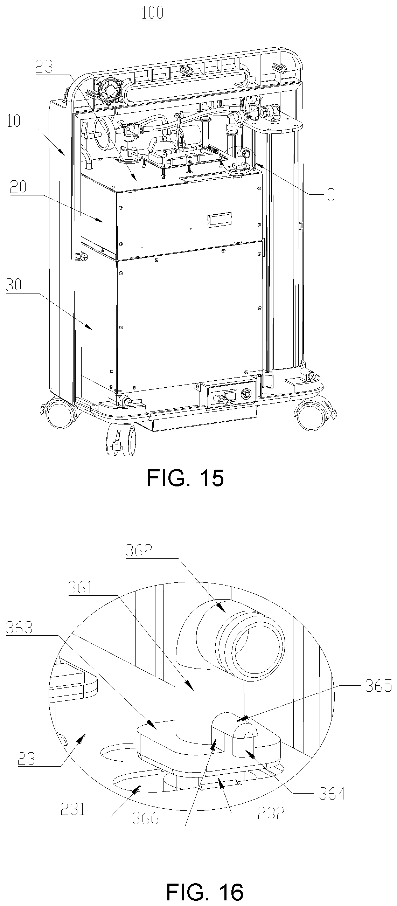

In some embodiments of the present disclosure, referring to FIG. 9 and FIG. 16, a first air intake pipe 37 is provided within the device chamber 20. A lower end of a pipe head portion 361 is connected to the first air intake pipe 37. A reserved opening 231 is formed on the top plate 23 of the device chamber 20 and is located above the first air intake pipe 37. The pipe head portion 361 is connected to the first air intake pipe 37 by passing through the reserved opening 231. The compressor 35 is disposed within the compressor chamber 30. The device chamber 20 is located on an upper side of the compressor chamber 30. The mounting cavity 18 is disposed above the device chamber 20. When the intake pipe head 36 is installed downward, the lower end of the pipe head portion 361 is connected to the first air intake pipe 37 by passing through the reserved opening 231. A mounting plate 363 is disposed within the mounting notch 1812, and a limiting column 364 is installed into a limiting groove 1813, thereby achieving lower end connection and installation fixation of the intake pipe head 36. This facilitates simplification of installation operation steps and improves installation and fixation efficiency.

In some embodiments of the present disclosure, a supporting edge 232, which is bent upwardly and extends, is disposed at an edge of the reserved opening 231. The supporting edge 232 is configured to support the mounting plate 363. An upper end of the supporting edge 232 is disposed flush with a bottom of the mounting notch 1812.

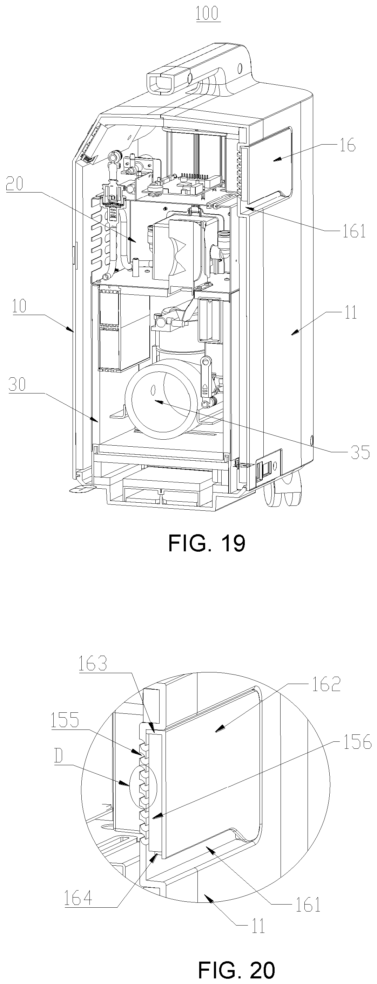

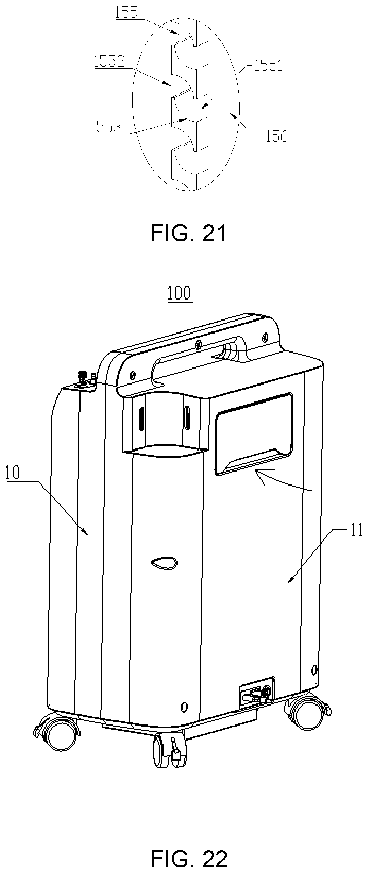

In some embodiments of the present disclosure, referring to FIG. 20 and FIG. 21, the first air inlet 155 extends in an inward direction away from a first air intake port 161, that is, the first air inlet 155 extends in an outward direction towards the first air intake port 161. This causes external air entering through the first air inlet 155 to flow inwardly within the air intake cavity 15 and towards the first air inlet 155. The inclined direction of the first air inlet 155 is consistent with an airflow direction within the air intake cavity 15, which facilitates smoothness of a cooling airflow path. Preferably, an inclined extension dimension of the first air inlet 155 in an inward direction is greater than or equal to a width of the air inlet side 1551 of the first air inlet 155. The first air inlet 155 comprises an air inlet side 1551 and an air outlet side 1552. A distance between a plane where a lower end of the air inlet side 1551 is located and a plane where a lower end of the air outlet side 1552 is located refers to the inclined extension dimension of the first air inlet 155 in an inward direction. A vertical dimension of the first air inlet 155 is the width. By setting the inclined extension dimension to be greater than or equal to the width of the air inlet side 1551, only an arcuate air inlet surface 1553 of the first air inlet 155 is visible when viewed inwardly from an outer side of the first air inlet 155.

In some embodiments of the present disclosure, the first air inlet 155 comprises two arcuate air inlet surfaces 1553 that are inclined and arranged opposite to each other in the vertical direction. The arcuate air inlet surfaces 1553 are concave surfaces. By providing the arcuate air inlet surfaces 1553, it facilitates increasing a cross-sectional dimension of the first air inlet 155 and improving an airflow rate passing through the first air inlet 155. A plurality of first air inlets 155 disposed in parallel are provided on a bottom 152 of the air intake cavity 15. The first air inlets 155 extend in a horizontal direction. A distance between two adjacent first air inlets 155 is equal to a width of the first air inlet 155.

In some embodiments of the present disclosure, the oxygen generating device 100 is provided with the cooling air duct 40.

Referring to FIGs. 22 to 31, the cooling air duct 40 comprises: the first air duct 41, the second air duct 42, and the first air inlet 155. The first air inlet 155 is disposed at an inlet end of the first air duct 41 and formed on the first sidewall 11 of the housing 10. The housing 10 is approximately square in shape and has four sidewalls. The compressor chamber 30 and the device chamber 20 are also square shells. Both the compressor chamber 30 and the device chamber 20 are spaced apart from the sidewalls of the housing 10. The first sidewall 11 and the second sidewall 12 of the housing 10 are disposed opposite to each other. The device chamber 20 is provided with a first side plate 21 adjacent to the first sidewall 11 and the second side plate 22 adjacent to the second sidewall 12. The arrow direction in FIG. 2 indicates a flow direction of the cooling airflow.

In the present embodiment, the first air duct 41 is located between the top wall 13 of the housing 10 and the top plate 23 of the device chamber 20. The second air duct 42 is connected to the first air duct 41 and is located between the second sidewall 12 of the housing 10 and the second side plate 22 of the device chamber 20. The cooling airflow blown in from the first air inlet 155 enters the first air duct 41, flowing over the upper side of the device chamber 20, and then flows downward into the second air duct 42. The device chamber 20 is provided with a fan 25 configured to provide power for the airflow within the cooling air duct 40. When the fan 25 is activated, a negative pressure is generated within the first air duct 41 and the second air duct 42, thereby causing external air to enter the cooling air duct 40 through the first air inlet 155. The compressor chamber 30 is provided with the compressor 35. The cooling airflow flows through the compressor 35, thereby cooling the compressor 35. By providing the device chamber 20, it is facilitated to partition an internal space of the housing 10 into a plurality of separate spaces, thereby facilitating increasing a duct length and increasing a number of components through which the cooling airflow flows. By providing communication between the separate spaces and communication with the outside, a bent and smooth airflow path is formed, thereby increasing cooling efficiency for internal components of the cooling air duct 40. By providing the first air duct 41, the airflow, after entering from the first air inlet 155, flows between the top wall 13 of the housing 10 and the top plate 23 of the device chamber 20. The cooling airflow flows over the upper side of the device chamber 20, which can dissipate heat from components located above the top plate 23 of the device chamber 20, thereby facilitating improvement of the cooling effect. While the cooling airflow continues to dissipate the heat from the compressor 35, which is a main heat- generating component, the cooling airflow path can be extended, thereby increasing the number of components flowed through, so as to dissipate heat from other heat-generating components.

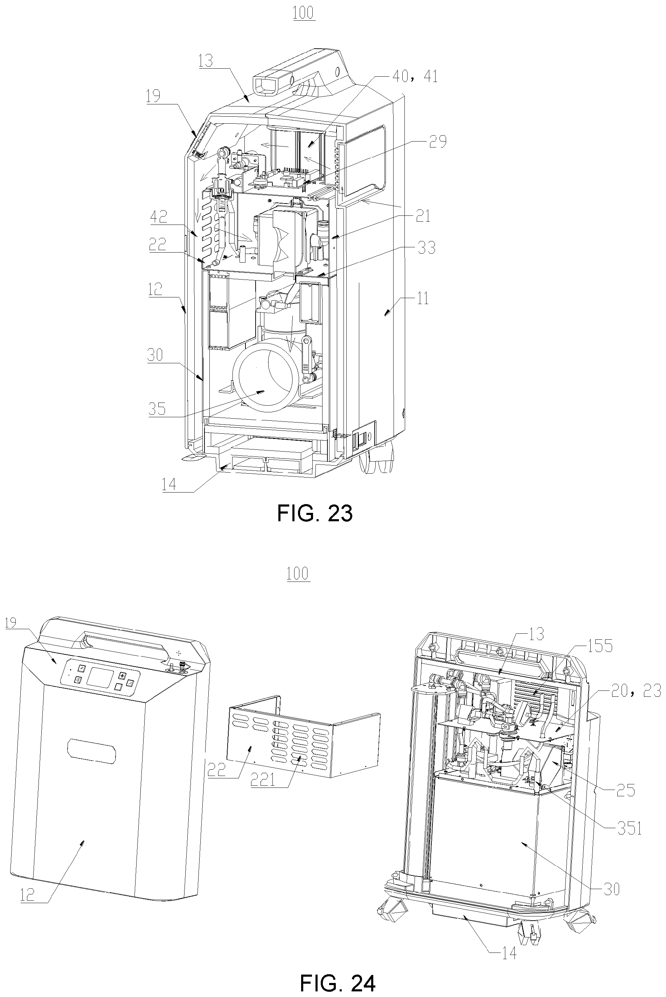

In some embodiments of the present disclosure, referring to FIG. 23 and FIG. 24, the second air inlet 221 is formed on the second side plate 22 of the device chamber 20. The airflow within the second air duct 42 enters the device chamber 20 through the second air inlet 221. By providing that a plane where the top plate 23 of the device chamber 20 is located is lower than the first air inlet 155, it causes the airflow entering from the first air inlet 155 to directly blow above the device chamber 20. The second air inlet 221 is formed on the second side plate 22, thereby causing the airflow within the second air duct 42 to be drawn into the device chamber 20. The first air inlet 155 is formed on the first sidewall 11, thereby causing the cooling airflow in the cooling air duct 40 to flow over an upper side of the device chamber 20, then bend and flow downward, and only then reach the device chamber 20 through the second air inlet 221. Compared to an existing duct arrangement, the first air duct 41 and the second air duct 42 are provided.

In some embodiments of the present disclosure, the oxygen generating device 100 comprises the first circuit board 29 located within the first air duct 41. The first circuit board 29 is fixedly disposed on the top plate 23 of the device chamber 20. The cooling airflow flows through the first circuit board 29, thereby taking away the heat from the first circuit board 29. The first circuit board 29 is a top circuit board. During operation, the circuit board generates heat. Its disposition within the first air duct 41 facilitates timely removal of the heat. The first electronic components include sensing components, detection components, or the like.

In some embodiments of the present disclosure, a panel frame 19 is provided obliquely between the top wall 13 and the second sidewall 12 of the housing 10. The panel frame 19 is inclined away from the second sidewall 12 in an upward direction. An inner side of the panel frame 19 forms airflow guiding for the flowing airflow. The control panel is mounted on the panel frame 19. Taking a side of the oxygen generating device close to a user under normal operating conditions as a front side, and the oppsite side is defined as a rear side, the second sidewall 12 is a front panel of the oxygen generating device. When the airflow within the first air duct 41 flows through the inner side of the panel frame 19, the airflow needs to bend downward to change its direction. The inclined arrangement of the panel frame 19 serves to guide the airflow.

In some embodiments of the present disclosure, the first circuit board 29 is spaced apart from the top plate 23 of the device chamber 20. Firstly, it can increase a shock absorption effect, thereby preventing vibration of the top plate 23 from being directly transferred to the first circuit board 29. Secondly, the cooling airflow can pass through above and below the first circuit board 29, and both the upper and lower end surfaces of the first circuit board 29 can contact the cooling airflow, which facilitates increasing a contact area between the first circuit board 29 and the cooling airflow, thereby improving a cooling effect. The first circuit board 29 is disposed in parallel with the top plate 23. The distance between the first circuit board 29 and the top plate 23 is small. The heat generated by the first circuit board 29 can be transferred to the top plate 23, and the top plate 23 acts as a heat sink for the first circuit board 29. When the cooling airflow passes through the first air duct 41, a portion of the heat on the top plate 23 is also taken away. The plurality of support columns 28 are provided on the top plate 23 of the device chamber 20. The first circuit board 29 is fixedly disposed on the plurality of support columns 28, thereby achieving spaced arrangement between the first circuit board 29 and the top plate 23.

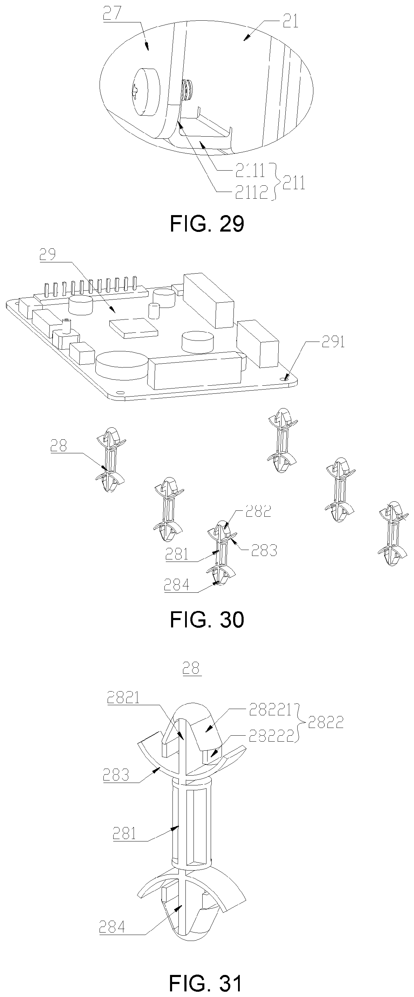

In some embodiments of the present disclosure, referring to FIG. 30 and FIG. 31, the support column 28 comprises a column body 281 and a snap-fitting limiting top cap 282 located at an upper end of the column body 281. A first fixing hole 291 is formed on the first circuit board 29, which is matched with the snap-fitting limiting top cap 282. The snap-fitting limiting top cap 282 is snap-fitted and fixed with the first fixing hole 291. By providing the support column 28, the spaced arrangement between the first circuit board 29 and the top plate 23 is achieved. By providing the snap-fitting limiting top cap 282, snap-fitting fixation between the support column 28 and the first circuit board 29 is achieved, thereby facilitating improvement of installation efficiency.

In some embodiments of the present disclosure, the snap-fitting limiting top cap 282 comprises a connecting portion 2821 connected to the column body 281, and two claws 2822 disposed opposite to each other along a top end of the connecting portion 2821. The claw 2822 comprises a claw portion 28221 extending away from the connecting portion in the downward direction, and an abutting portion 28222 extending downwardly from the claw portion 28221. The abutting portion 28222 abuts against an upper end surface of the first circuit board 29. The two claw portions 28221 move away from each other in the downward direction, thereby achieving snap-fitting with the first fixing hole 291. The abutting portions 28222 are provided for limiting upward movement of the first circuit board 29. The column body 281 is provided with an elastic plate 283 abutting against a lower end surface of the first circuit board 29. The elastic plate 283 is located on a lower side of the snap-fitting limiting top cap 282. By providing the elastic plate 283 for limiting downward movement of the first circuit board 29, it can ensure the fixation stability of the first circuit board 29. The elastic plate 283 is arranged in an upwardly arcuate inclined manner in a direction away from the column body 281. When the support column 28 is installed onto the first circuit board 29, in order to allow the snap-fitting limiting top cap 282 to pass through the first fixing hole 291, the elastic plate 283 is pressed downward and deformed by the first circuit board 29. Thereafter, the elastic plate 283 may move upward and reset, thereby achieving that the first circuit board 29 is limited between the elastic plate 283 and the abutting portion 28222 and achieving secure fixation.

In some embodiments of the present disclosure, a lower end of the support column 28 is provided with a snap-fitting limiting bottom cap 284. The snap-fitting limiting bottom cap 284 may adopt the same structure as the snap-fitting limiting top cap 282, thereby achieving that the lower end of the support column 28 is snap-fitted and fixed on the top plate 23. The lower end of the support column 28 may also adopt other structures that can achieve fixation. A plurality of support columns 28 are provided between the top plate 23 and the first circuit board 29, thereby achieving support for the first circuit board 29.

In some embodiments of the present disclosure, referring to FIG. 24, the device chamber 20 is provided with a heat dissipation tube 351 connected to the compressor 35. The heat dissipation tube 351 is configured to deliver compressed gas. The heat dissipation tube 351 is configured as an S-shaped structure, which can increase a contact area between the heat dissipation tube 351 and the cooling airflow, thereby facilitating heat dissipation. The heat dissipation tube 351 is disposed on an inner side of the second air inlet 221. The cooling airflow within the second air duct 42 enters an interior of the device chamber 20 via the second air inlet 221 and may first cool the heat dissipation tube 351.

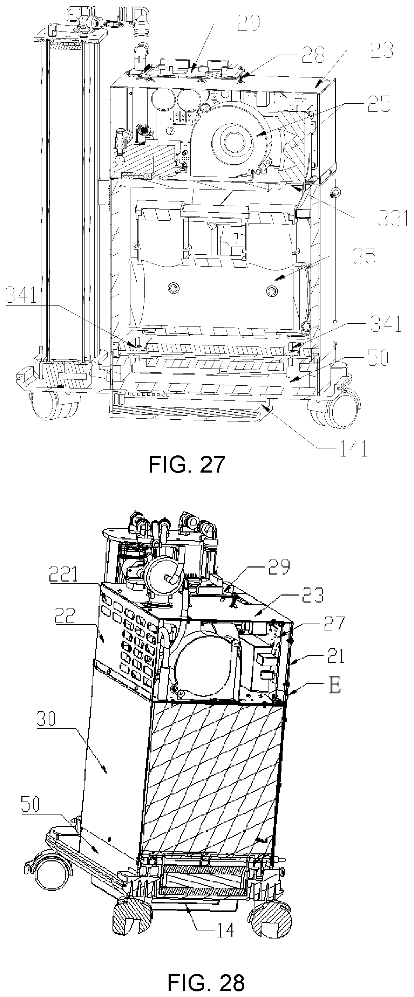

In some embodiments of the present disclosure, referring to FIG. 28, the second circuit board 27 is disposed within the device chamber 20. The second circuit board 27 is fixedly disposed on the first side plate 21 of the device chamber 20. The first side plate 21 and the second side plate 22 are disposed opposite to each other. The second circuit board 27 is spaced apart from the first side plate 21 and is disposed in parallel with the first side plate 21. The second circuit board 27 is spaced apart from the first side plate 21. First, it can increase a vibration reduction effect, thereby preventing vibration of the first side plate 21 from being directly transmitted to the second circuit board 27. Second, as the distance between the second circuit board 27 and the first side plate 21 is small, heat emitted from the second circuit board 27 may be transmitted to the first side plate 21, allowing the first side plate 21 to serve as a heat sink for the second circuit board 27. Third, the cooling airflow may pass through an inner side and an outer side of the second circuit board 27, which is beneficial for increasing the contact area between the second circuit board 27 and the cooling airflow, thereby improving the heat dissipation effect. The cooling airflow entering the device chamber 20 first passes through the inner side and the outer side of the second circuit board 27 to dissipate heat from the second circuit board 27, and then is drawn into an interior of the fan 25.

In some embodiments of the present disclosure, referring to FIG. 29, a mounting frame 211 is provided on the first side plate 21 and is configured to fix the second circuit board 27. The mounting frame 211 comprises a support portion 2111 extending inwardly from the first side plate 21, and a fixing portion 2112 bent and extending from an inner end of the support portion 2111. The second circuit board 27 is fixed on the fixing portion 2112. By providing the mounting frame 211, fixation of the second circuit board 27 and the spaced arrangement between the second circuit board 27 and the first side plate 21 can be achieved. The second circuit board 27 is fixed on the fixing portion 2112 by a fastener and is vertically disposed. A plurality of mounting frames 211 are provided on the first side plate 21.

In some embodiments of the present disclosure, electronic components within the oxygen generating device 100 are classified and integrated. Electronic components with a small heat dissipation amount during operation are placed on the first circuit board 29, fixedly disposed on an upper side of the top plate 23 of the device chamber 20 and located within the first air duct 41. The first circuit board 29 is provided with a plurality of first electronic components. The first electronic components include sensing electronic components, detection electronic components, or the like. Electronic components with a large heat dissipation amount during operation are placed on the second circuit board 27, fixedly disposed within an interior of the device chamber 20, thereby preventing heat from being rapidly transmitted to an exterior of the housing 10. The heat is carried away by the airflow within the cooling air duct 40. The second circuit board 27 is provided with a plurality of second electronic components. The second electronic components include driving electronic components for the fan and the compressor, or the like.

In some embodiments of the present disclosure, the device chamber 20 and the compressor chamber 30 are disposed adjacent to each other in the vertical direction. A bottom plate of the device chamber 20 simultaneously serves as a chamber top 33 of the compressor chamber 30. The third air inlet 331 is formed in the chamber top 33 and is configured to supply air to the compressor chamber 30. The fan 25 is fixed at the third air inlet 331. The fan 25 blows the cooling airflow downward through the third air inlet 331 into the compressor chamber 30.

In some embodiments of the present disclosure, the oxygen generating device 100 further comprises a silencing unit 50 disposed below the compressor chamber 30. A fourth air inlet 341 is formed in a bottom plate of the compressor chamber 30 and is configured to deliver airflow from the compressor chamber 30 to the silencing unit 50. On a bottom wall of the housing 10, a downwardly extending exhaust chamber 14 is provided. An air outlet 141 is formed in a sidewall of the exhaust chamber 14 and is configured to discharge gas. By providing the silencing unit 50, silencing may be performed when discharging gas, thereby preventing excessive noise. By providing the exhaust chamber 14, gas is prevented from being directly discharged downward from the oxygen generating device 100 and is discharged from the air outlet 141 on the sidewall. This, first, can increase the length and the number of bendings of an exhaust path, thereby further achieving the silencing effect; and second, it can prevent the gas from being directly discharged downward and impacting the ground, thereby affecting subsequent gas discharge.

In the present embodiment, the first sidewall 11 is a rear wall of the housing 10, that is, the first air inlet 155 is formed in the rear wall of the housing 10. After the fan 25 is started, gas within the device chamber 20 is first drawn into the fan 25, thereby creating a negative pressure within the device chamber 20. Gas outside the device chamber 20 is then supplied into the device chamber 20 through the second air inlet 221 of the second side plate 22, meaning that gas within the second air duct 42 is drawn into the device chamber 20, thereby creating a negative pressure within the second air duct 42. Gas from the first air duct 41 is then supplied to the second air duct 42, and thereafter external air enters the first air duct 41 through the first air inlet 155 on the first sidewall 11 of the housing 10. That is, external gas enters the first air duct 41 through the first air inlet 155. The cooling airflow flows through the first circuit board 29, carrying away a portion of heat emitted from the first circuit board 29. Thereafter, the cooling airflow, guided by the panel frame 19, bends downward and enters the second air duct 42, and enters the device chamber 20 through the second air inlet 221. The cooling airflow flows through the heat dissipation tube 351, and a portion of the cooling airflow flows through the second circuit board 27. Subsequently, the cooling airflow enters the fan 25 and is blown downward into the compressor chamber 30 to dissipate heat from the compressor 35. Thereafter, the cooling airflow passes downward through the fourth air inlet 341 into the silencing unit 50 for silencing. Finally, the cooling airflow reaches the exhaust chamber 14 and is discharged through the air outlet 141.

In some embodiments of the present disclosure, the oxygen generating device 100 is provided with the exhaust silencing device.

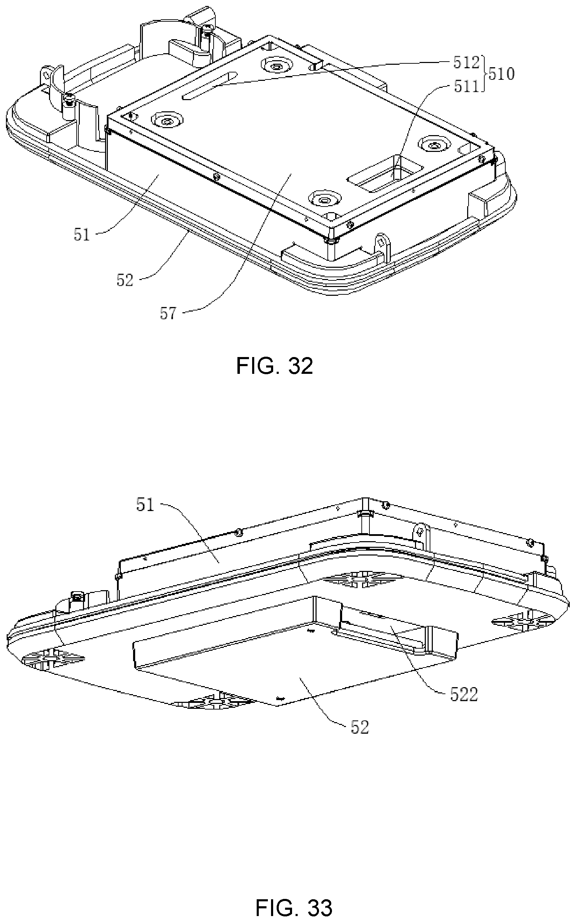

As shown in FIGs. 32-51, the exhaust silencing device comprises a bottom cover 51, a bottom shell 52, and an exhaust hood 53.

A silencing air inlet 510 is formed at the top of the bottom cover 51. A recessed bottom shell groove 521 is formed on the bottom shell 52. A silencing air outlet 522 is formed at one end of the bottom shell groove 521. The exhaust hood 53 is disposed in the bottom shell groove 521. One end of the exhaust hood 53 extends to the silencing air outlet 522, and the other end forms a perforated portion 531.

The bottom cover 51 is connected to the bottom shell 52 and covers the bottom shell groove 521. A first exhaust silencing chamber 54 is formed between an outer side of the exhaust hood 53 and the bottom cover 51. The first exhaust silencing chamber 54 is in communication with the silencing air inlet 510. A second exhaust silencing chamber 55 is formed between an inner side of the exhaust hood 53 and the bottom shell 52. The second exhaust silencing chamber 55 is in communication with the silencing air outlet 522.

The airflow to be processed for noise reduction enters the first exhaust silencing chamber 54 through the silencing air inlet 510 on the bottom cover 51, then enters the second exhaust silencing chamber 55 through the perforated portion 531 on the exhaust hood 53, and finally is discharged through the silencing air outlet 522. The airflow enters the second exhaust silencing chamber 55 from the first exhaust silencing chamber 54 through the perforated portion 531, thereby changing the flow direction, which can consume sound energy and reduce noise, causing the noise of the airflow discharged from the silencing air outlet 522 to be reduced.

Specifically, the perforated portion 531 of the exhaust hood 53 is disposed at an end far away from the silencing air outlet 522, which can extend the path of the airflow through the second exhaust silencing chamber 55, thereby fully reducing noise of the airflow. The silencing air inlet 510 may be disposed at an end of the bottom cover 51 far away from the perforated portion 531, to extend a path of the airflow through the first exhaust silencing chamber 54, thereby improving the silencing effect. A plurality of perforated portions 531 are provided on the exhaust hood 53 and are distributed in an array, which can guide the airflow direction and provide the silencing effect. The silencing air outlet 522 may be disposed on a sidewall of the bottom shell groove 521 or may be disposed on a bottom of the bottom shell groove 521.

The bottom cover 51 and the bottom shell 52 are fixedly connected. Specifically, the bottom cover 51 and the bottom shell 52 may be fixedly connected by means of fasteners, snap-fit connection, plug-in connection, or other detachable manners. The exhaust hood 53 is detachably connected in the bottom shell groove 521 of the bottom shell 52, such that an overall structure is simple, manufacturing cost is low, installation and disassembly are convenient, and the noise reduction effect is good.

The exhaust silencing device is disposed in the oxygen generating device. The compressor chamber 30 of the oxygen generating device is provided with the compressor 35. A third air duct 43 is formed within the compressor chamber 30 and is configured to dissipate heat from the compressor 35. Nitrogen separated from the oxygen generating device and the cooling airflow within the third air duct 43 can enter the exhaust silencing device and then be discharged. The exhaust silencing device can reduce noise of the airflow and can reduce noise transmission from an interior of the oxygen generating device, thereby providing a quiet oxygen-using environment for a user.

The exhaust silencing device is disposed below the compressor 35 and is located at a bottom of the oxygen generating device, which can reduce noise generated by the compressor from being transmitted from the bottom of the oxygen generating device.

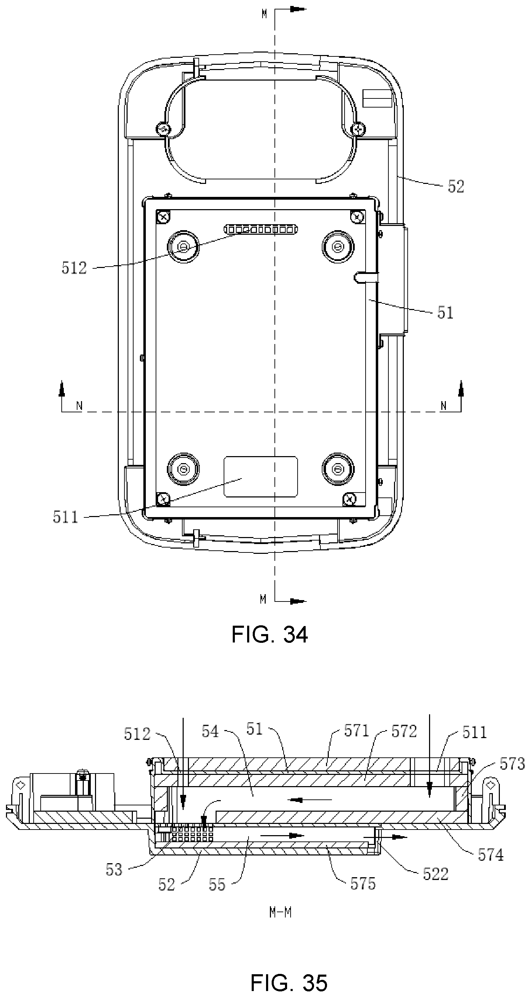

In some embodiments, as shown in FIGs. 34 and 35, the silencing air inlet 510 comprises the first silencing air inlet 511 and the second silencing air inlet 512. The first silencing air inlet 511 and the second silencing air inlet 512 are respectively proximate to two opposite ends of the bottom cover 51. The airflow can enter the first exhaust silencing chamber 54 through the first silencing air inlet 511 and the second silencing air inlet 512.

Two air inlets are respectively disposed at two ends of the bottom cover 51, which can increase the flow rate of the airflow entering the exhaust silencing device, thereby ensuring the heat dissipation effect of the cooling airflow in the cooling air duct on the compressor 35 and preventing overheating of the compressor. Furthermore, the first silencing air inlet 511 and the second silencing air inlet 512 are respectively proximate to cylinders at two ends of the compressor 35, allowing the cooling airflow to quickly carry away heat from the cylinders at the two ends of the compressor 35.

Further, the first silencing air inlet 511 is proximate to the silencing air outlet 522 of the bottom shell 52, and the second silencing air inlet 512 is proximate to the perforated portion 531 of the exhaust hood 53, such that after the airflow enters the second silencing air inlet 512, it can quickly enter the second exhaust silencing chamber 55 through the perforated portion 531, reducing resistance to the airflow, facilitating smooth airflow discharge, and ensuring the heat dissipation effect of the compressor.

In one embodiment, as shown in FIGs. 34 and 35, an opening area of the first silencing air inlet 511 is larger than an opening area of the second silencing air inlet 512. A flow rate of airflow entering through the first silencing air inlet 511 is larger than a flow rate of airflow entering through the second silencing air inlet 512. More airflow enters the first exhaust silencing chamber 54 through the first silencing air inlet 511, where a flow path in the first exhaust silencing chamber 54 is longer, thereby fully exerting a noise reduction effect of the first exhaust silencing chamber 54. At the same time, the purpose of providing the second silencing air inlet 512 is to allow heat generated by the compressor above it to be discharged, thereby preventing accumulation of hot air above it, which would otherwise reduce its overall heat dissipation performance.

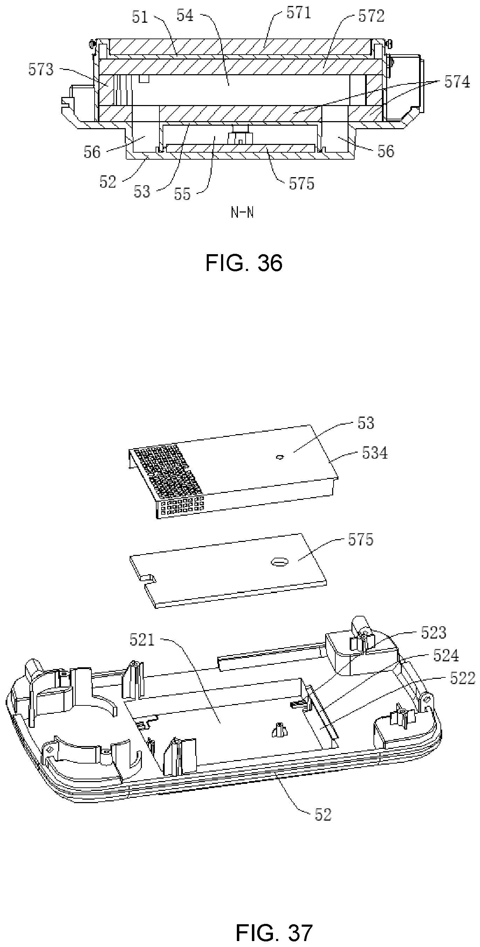

In some embodiments, as shown in FIGs. 36, 37, and 38, the perforated portions 531 are distributed on a top surface and a side surface of the exhaust hood 53. A groove gap 56 is formed between the side surface of the exhaust hood 53 and a sidewall of the bottom shell groove 521. The groove gap 56 is in communication with the first exhaust silencing chamber 54. A portion of gas in the first exhaust silencing chamber 54 can enter the groove gap 56, then enters the second exhaust silencing chamber 55 through the perforated portions 531 on the side surface of the exhaust hood 53, which can reduce resistance of the exhaust hood 53 to the airflow. The exhaust hood 53 may be configured as a U-shaped structure, or may be configured as an arc-shaped structure. One end of the exhaust hood 53 surrounds the silencing air outlet 522, allowing the airflow to only pass through the second exhaust silencing chamber 55 to reach the silencing air outlet 522.

The exhaust hood 53 comprises an upper hood plate 532 and at least one side hood plate 533, and the perforated portions 531 are distributed on the upper hood plate 532 and the side hood plate 533. The groove gap 56 is formed between the side hood plate 533 and a corresponding sidewall of the bottom shell groove 521.

In one embodiment, the exhaust hood 53 comprises the upper hood plate 532 and the side hood plate 533 and forms an L-shaped structure.

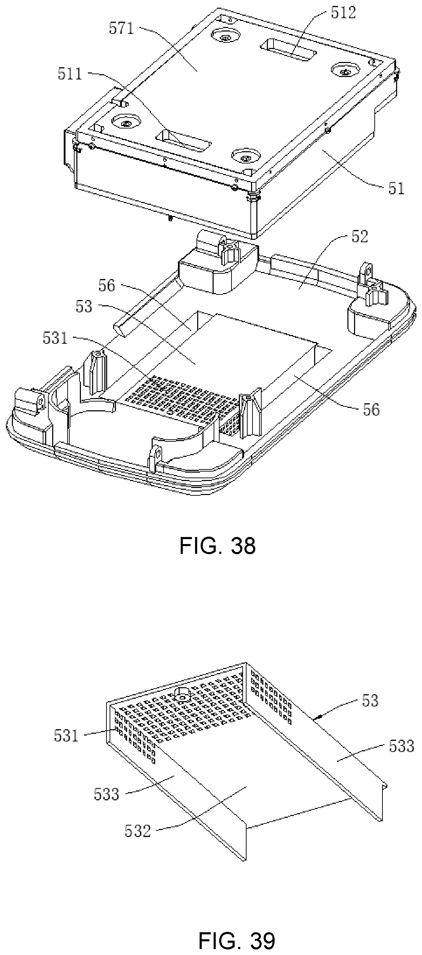

In one embodiment, as shown in FIGs. 37 and 38, the exhaust hood 53 comprises the upper hood plate 532 and two side hood plates 533, and the two side hood plates 533 are respectively connected to opposite side edges of the upper hood plate 532. The first exhaust silencing chamber 54 is located on an outer side of the upper hood plate 532. The second exhaust silencing chamber 55 is located between the upper hood plate 532 and the two side hood plates 533. The groove gap 56 is formed between the side hood plate 533 and the sidewall of the bottom shell groove 521. The perforated portions 531 are disposed at an end of the upper hood plate 532 and the two side hood plates 533 far away from the silencing air outlet 522. The bottoms of the two side hood plates 533 abut the bottom of the bottom shell groove 521. One end of the upper hood plate 532 and the two side hood plates 533 extends to the silencing air outlet 522, and the other end extends to the sidewall of the bottom shell groove 521 opposite to the silencing air outlet 522.

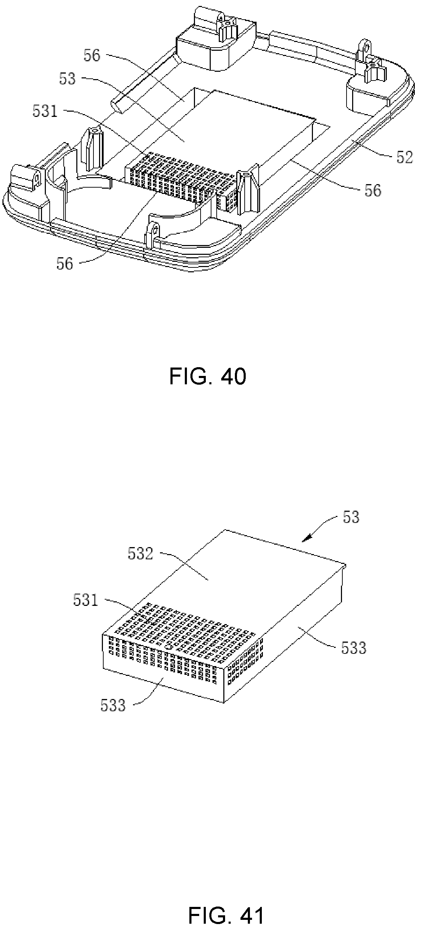

In another specific embodiment, as shown in FIG. 40 and FIG. 41, the exhaust hood 53 comprises the upper hood plate 532 and three side hood plates 533. One side edge of the upper hood plate 532 is proximate to the silencing air outlet 522. The three side hood plates 533 are respectively connected to an edge of the upper hood plate 532 away from the silencing air outlet 522. The adjacent side hood plates 533 are connected to each other.

The first exhaust silencing chamber 54 is located on an outer side of the upper hood plate 532. The second exhaust silencing chamber 55 is located between the upper hood plate 532 and the three side hood plates 533. Groove gaps 56 are respectively formed between the three side hood plates 533 and the sidewall of the bottom shell groove 521.

The arrangement of the first silencing air inlet 511, the second silencing air inlet 512, and the structural arrangement of the exhaust hood 53 can enable the exhaust silencing device to both increase the exhaust volume to ensure a heat dissipation effect for the compressor 35 and fully reduce the noise of the airflow, thereby ensuring a noise reduction effect.

In some embodiments, as shown in FIG. 37, a positioning structure may be provided on the bottom shell 52. The positioning structure cooperates with the exhaust hood 53 to define a mounting position of the exhaust hood 53. Further, the exhaust hood 53 may be fixedly connected to the bottom shell 52 by means of fasteners such as screws.

Specifically, the positioning structure comprises a first positioning groove 523 disposed on the bottom of the bottom shell groove 521. A bottom of the side hood plate 533 of the exhaust hood 53 is snap-fitted with the first positioning groove 523. The positioning structure further comprises a second positioning groove 524 disposed on an edge of the bottom shell groove 521. The second positioning groove 524 is located at a top of the silencing air outlet 522. An edge of the upper hood plate 532 of the exhaust hood 53 is provided with an overlapping edge 534. The overlapping edge 534 is capable of engaging in the second positioning groove 524. The exhaust hood 53 is installed in place under the restriction of the positioning structure, and the edges of the exhaust hood 53 abut the bottom shell 52. The airflow can only enter the second exhaust silencing chamber 55 through the perforated portions 531, thereby preventing the generation of gaps between the exhaust hood 53 and the bottom shell 52, which would affect the flow path of the airflow.

In some embodiments, an interior of the first exhaust silencing chamber 54 and/or an interior of the second exhaust silencing chamber 55 is respectively filled with the exhaust sound-absorbing cotton 57. The exhaust sound-absorbing cotton 57 can absorb noise of the airflow in the first exhaust silencing chamber 54 and/or the second exhaust silencing chamber 55.

In some embodiments, a top surface of the bottom cover 51 is provided with the exhaust sound-absorbing cotton 57. The exhaust silencing device is disposed at the bottom of the oxygen generating device. The compressor is located above the bottom cover 51. The exhaust sound-absorbing cotton 57 on the top surface of the bottom cover 51 can absorb noise from the compressor.

The exhaust sound-absorbing cotton 57 may be a layered structure, and is fixedly connected to the bottom cover 51, the bottom shell 52, or the exhaust hood 53 by manners such as adhesion, snap-fitting, or fastener connection. The exhaust sound-absorbing cotton 57 may be selected as a porous sound-absorbing cotton, for example, inorganic fiber, organic fiber, inorganic foam, foam plastic, or the like, or other existing sound-absorbing cotton.

It should be noted that the exhaust sound-absorbing cotton mainly achieves a noise reduction effect through its internal porous structure and fiber material. When sound enters the exhaust sound-absorbing cotton, sound waves cause its internal material to vibrate. Through its fiber material, the sound wave energy is further converted into minor heat energy, thereby causing the sound intensity to weaken. However, if too much exhaust sound-absorbing cotton is provided, it can lead to a decrease in heat dissipation performance. Therefore, it is necessary to ensure the heat dissipation performance and quietness of the device through a reasonable distribution of the placement positions of the exhaust sound-absorbing cotton and the unobstructed flow of the air ducts.

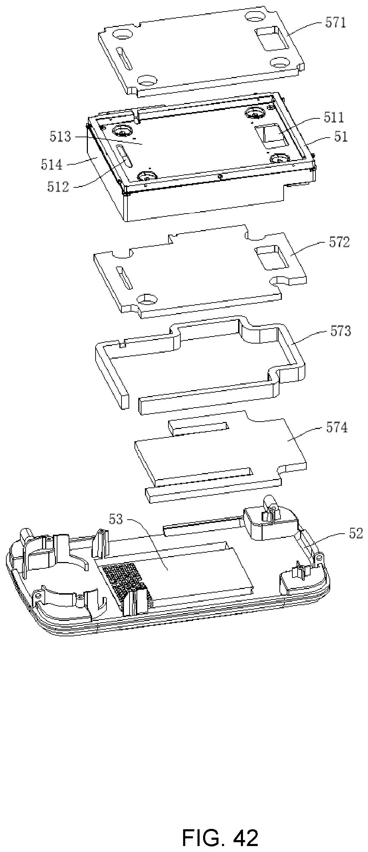

In some embodiments, the exhaust sound-absorbing cotton 57 is disposed on a top of the bottom cover 51 and within the first exhaust silencing chamber 54. As shown in FIGs. 42-44, the bottom cover 51 comprises a bottom cover top plate 513 and a bottom cover side plate 514. The bottom cover side plate 514 is connected to the peripheral edge of the bottom cover top plate 513. A top surface of the bottom cover top plate 513 is provided with a first exhaust sound-absorbing cotton 571, which is configured to reduce noise within the oxygen generating device. A bottom surface of the bottom cover top plate 513 is provided with a second exhaust sound-absorbing cotton 572. An inner side of the bottom cover side plate 514 is provided with a third exhaust sound-absorbing cotton 573. The second exhaust sound-absorbing cotton 572 and the third exhaust sound-absorbing cotton 573 are provided in the first exhaust silencing chamber 54 and absorb noise of the airflow in the first exhaust silencing chamber 54. The first exhaust sound-absorbing cotton 571 and the second exhaust sound-absorbing cotton 572 respectively form through holes corresponding to the air inlets. In detail, the first exhaust sound-absorbing cotton 571 and the second exhaust sound-absorbing cotton 572 respectively form through holes corresponding to the first silencing air inlet 511 and the second silencing air inlet 512, exposing the first silencing air inlet 511 and the second silencing air inlet 512, thereby facilitating rapid circulation of the airflow.

A top surface of the exhaust hood 53 is provided with a fourth exhaust sound-absorbing cotton 574. The fourth exhaust sound-absorbing cotton 574 is configured to avoid the groove gap 56 on the side surface of the exhaust hood 53 and the perforated portions 531 on the top surface of the exhaust hood 53, thereby reducing air intake resistance, allowing the airflow in the first exhaust silencing chamber 54 to smoothly pass through the exhaust hood 53 and enter the second exhaust silencing chamber 55. The fourth exhaust sound-absorbing cotton 574 is located in the first exhaust silencing chamber 54 and absorbs noise of the airflow in the first exhaust silencing chamber 54.

The second exhaust sound-absorbing cotton 572, the third exhaust sound-absorbing cotton 573, and the fourth exhaust sound-absorbing cotton 574 surround an inner wall of the first exhaust silencing chamber 54. When the airflow passes through the space enclosed by the second exhaust sound-absorbing cotton 572, the third exhaust sound-absorbing cotton 573, and the fourth exhaust sound-absorbing cotton 574, sound is absorbed.

Further, as shown in FIGs. 35-37, a fifth exhaust sound-absorbing cotton 575 is disposed in the second exhaust silencing chamber 55. The fifth exhaust sound-absorbing cotton 575 is disposed on the bottom of the bottom shell groove 521, which can reduce noise of the airflow in the second exhaust silencing chamber 55.

The sidewall of the bottom shell groove 521 and an outer side of the side hood plate 533 of the exhaust hood 53 may also be provided with sound-absorbing cotton to reduce noise of the airflow in the groove gap 56. The sound-absorbing cotton in the groove gap 56 needs to avoid the perforated portions 531 on the side surface of the exhaust hood 53.

The first exhaust sound-absorbing cotton 571, the second exhaust sound-absorbing cotton 572, the fourth exhaust sound-absorbing cotton 574, and the fifth exhaust sound-absorbing cotton 575 are arranged below the compressor, forming a multi-layer silencing structure. This structure can fully isolate noise generated by the compressor, thereby effectively reducing the noise of the compressor 35 from being transmitted out of the bottom of the oxygen generating device.

In some embodiments, as shown in FIG. 36, a covered area of the bottom cover 51 is larger than that of the bottom shell groove 521. A space of the first exhaust silencing chamber 54 is larger than a space of the second exhaust silencing chamber 55, which can achieve an effect of variable diameter silencing. Additionally, the airflow stays longer in the first exhaust silencing chamber 54, thereby fully reducing noise. The fourth exhaust sound-absorbing cotton 574 extends to an edge of the bottom shell groove 521, fully surrounding the first exhaust silencing chamber 54.

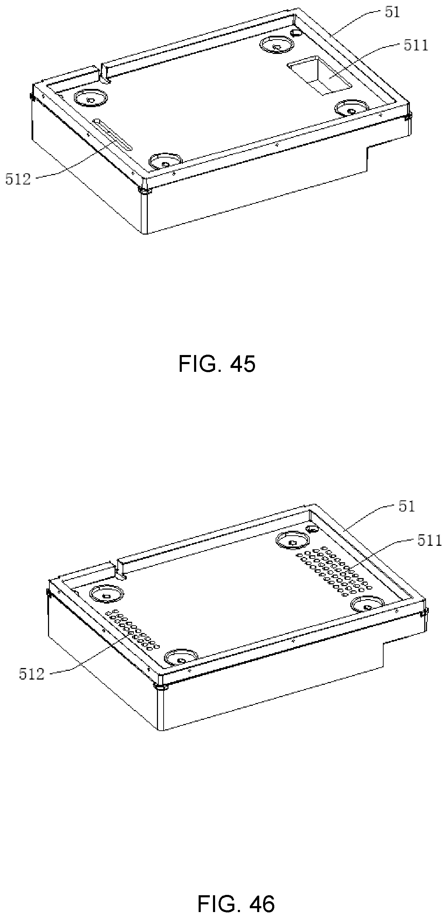

In an embodiment, as shown in FIG. 45, the air inlet on the bottom cover 51 is a single through hole. Specifically, the first silencing air inlet 511 and the second silencing air inlet 512 are respectively single through holes. The first silencing air inlet 511 and the second silencing air inlet 512 are respectively proximate to two opposite ends of the bottom cover 51 and respectively extend to two opposite sides of the bottom cover 51, to increase an opening area.

In an embodiment, as shown in FIG. 46, the air inlet on the bottom cover 51 is composed of a plurality of array-distributed small holes. Specifically, the first silencing air inlet 511 and the second silencing air inlet 512 are respectively composed of a plurality of small holes. The small holes have a silencing effect and can reduce noise of the passing airflow. Further, a total area of all the small holes of the first silencing air inlet 511 is larger than a total area of all the small holes of the second silencing air inlet 512, thereby causing an air intake volume of the first silencing air inlet 511 to be larger than an air intake volume of the second silencing air inlet 512.

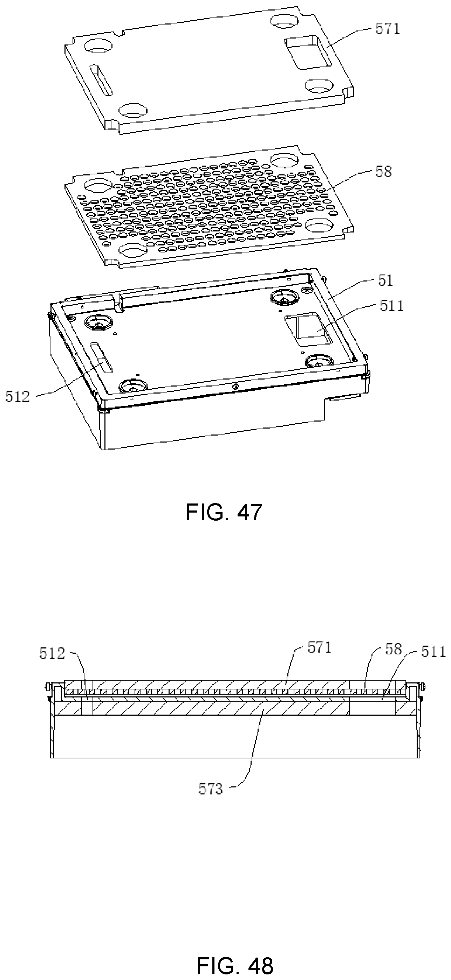

In an embodiment, as shown in FIG. 47 and FIG. 48, the bottom cover 51 is provided with a silencing perforated plate 58 covering the air inlets. The silencing perforated plate 58 is provided with a plurality of silencing small holes, having a noise reduction effect.

Specifically, the silencing perforated plate 58 is disposed between a top surface of the bottom cover 51 and the first exhaust sound-absorbing cotton 571. After the airflow passes through the silencing small holes on the silencing perforated plate 58, it enters the air inlets of the bottom cover 51. The silencing small holes can perform preliminary noise reduction on the airflow.

Further, a gap is formed between the silencing perforated plate 58 and the bottom cover 51. By providing the silencing perforated plate 58, the airflow movement speed can be increased. Specifically, the gap is formed between the silencing perforated plate 58 and the bottom cover top plate 513 of the bottom cover 51.

The silencing perforated plate 58 can serve to support the first exhaust sound-absorbing cotton 571. Through the arrangement of the first exhaust sound-absorbing cotton 571, the silencing perforated plate 58, the bottom cover 51, and the bottom cover top plate 513 of the bottom cover 51, a silencing effect of increasing variable diameter and extending the path can be achieved for the passing airflow.

In some embodiments, the compressor 35 of the oxygen generating device 100 is connected above the exhaust silencing device. An outer side of the compressor 35 is provided with a compressor cover 38. The exhaust silencing device is connected to a bottom of the compressor cover 38.

In detail, the bottom of the compressor cover 38 forms an opening. A bottom edge of the compressor cover 38 is fixedly connected to the bottom cover 51 or the bottom shell 52 of the exhaust silencing device. The exhaust silencing device and the compressor cover 38 enclose a compressor chamber 30. The compressor 35 is located within the compressor chamber 30, which can reduce noise from being transmitted out. The exhaust silencing device can serve as a mounting base for the compressor 35.

In some embodiments, a third air duct 43 is formed inside the compressor cover 38. Alternatively, a third air duct 43 is formed in the compressor chamber 30. The airflow in the third air duct 43 can carry away heat of the compressor 35, thereby preventing the compressor 35 from overheating. The silencing air inlet 510 of the exhaust silencing device communicates with the third air duct 43. The airflow in the third air duct 43 can enter the exhaust silencing device through the silencing air inlet 510. After noise reduction, the airflow is discharged through the silencing air outlet 522 of the exhaust silencing device.

In some embodiments of the present disclosure, the oxygen generating device 100 is provided with a silencing structure.

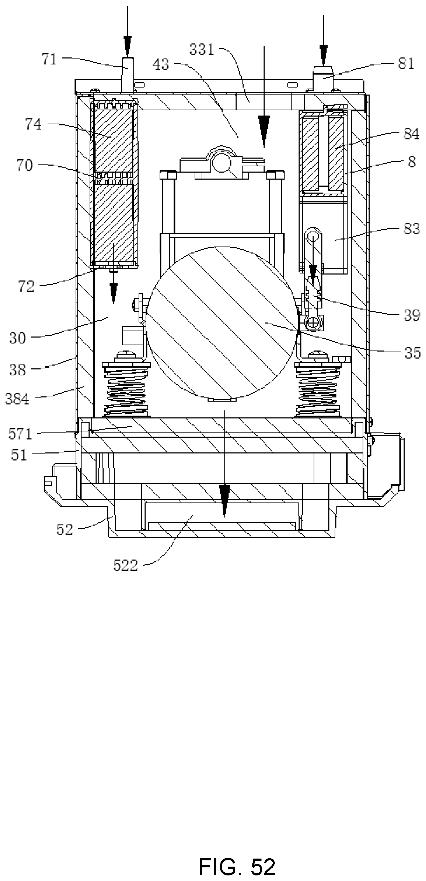

As shown in FIGs. 52-57, the silencing structure comprises an intake silencing device 80 and a nitrogen silencing device 70. The intake silencing device 80 is configured to silence and reduce noise of air entering the compressor 35, and the nitrogen silencing device 70 is configured to silence and reduce noise of nitrogen discharged from the oxygen generating device 100. The intake silencing device 80 and the nitrogen silencing device 70 are disposed within the compressor chamber 30.

A side of the compressor 35 is connected to the second air intake pipe 39. The intake silencing device 80 is disposed on the side of the compressor 35 connected to the second air intake pipe 39, and the nitrogen silencing device 70 is disposed on the other side of the compressor 35. The second air intake pipe 39 is connected to the air inlet of the compressor 35 and delivers air into the compressor 35.

The bottom of the intake silencing device 80 forms a clearance recess 83 configured to avoid the second air intake pipe 39. The intake silencing device 80 internally forms an intake silencing chamber and are provided with an air inlet 81 and an air outlet 82 in communication with the intake silencing chamber. The air outlet 82 is disposed within the clearance recess 83 and is connected to the second air intake pipe 39.

The airflow enters the intake silencing device 80 through the air inlet 81, and after silencing treatment, enters the compressor 35 through the second air intake pipe 39.

The nitrogen silencing device 70 internally forms a nitrogen silencing chamber and is provided with a nitrogen inlet 71 and a nitrogen outlet 72 in communication with the nitrogen silencing chamber. The nitrogen inlet 71 is configured to connect to the nitrogen pipeline of the oxygen generating device. The nitrogen separated by the oxygen generating device enters the nitrogen silencing device 70 through the nitrogen inlet 71, and after silencing treatment, is discharged into the compressor chamber 30 through the nitrogen outlet 72. Further, the opening area of the nitrogen inlet 71 is less than the opening area of the nitrogen outlet 72, thereby avoiding whistling noise.

The intake silencing device 80 and the nitrogen silencing device 70 are respectively disposed on opposite sides of the compressor 35, providing a compact structure and reasonably utilizing the space within the compressor chamber 30. In the limited internal space of the compressor chamber 30, the volume of the intake silencing device 80 and the nitrogen silencing device 70 can be increased, thereby improving the silencing effect.

The intake silencing device 80 avoids the second air intake pipe 39 via the clearance recess 83, which can allow it to better conform to the external shape of the compressor 35 and compactly cooperate with the compressor 35, increasing the volume of the intake silencing device 80, and improving the silencing effect. The clearance recess 83 causes the intake silencing chamber to form a tortuous airflow channel, which can change the flow direction of the airflow in the intake silencing chamber, allowing the airflow path to be more circuitous, consuming more energy, and thereby effectively reducing the noise of the airflow. The air outlet 82 is disposed on a side wall of the clearance recess 83, which can allow it to directly connect to the second air intake pipe 39 extending into the clearance recess 83, facilitating a reduction in pipeline length, making the structure more reasonable, and also reducing costs.

In detail, the compressor 35 is an oil-free air compressor, having two sets of cylinder assemblies. The second air intake pipe 39 is a three-way pipe capable of delivering air to the two sets of cylinder assemblies respectively. The air outlet 82 may be disposed on the side wall of the clearance recess 83 away from the air inlet 81, which can better extend the path of the airflow.

Further, for convenient connection, the air inlet 81, the air outlet 82, and the nitrogen inlet 71 may be configured as a pipe joint structure, facilitating the connection of pipelines.

In some embodiments, the sound-absorbing material is provided in the intake silencing chamber of the intake silencing device 80 and/or the nitrogen silencing chamber of the nitrogen silencing device 70. The sound-absorbing material can absorb the sound of the airflow and improve the silencing effect. The sound-absorbing material may be selected as porous sound-absorbing materials, for example, inorganic fibers, organic fibers, inorganic foams, plastic foams, or other existing sound-absorbing materials.

In detail, as shown in FIG. 52, the sound-absorbing material includes an intake silencing sound-absorbing cotton 84 disposed in the intake silencing chamber. The intake silencing sound-absorbing cotton 84 is configured to absorb the sound of the airflow in the intake silencing chamber. The sound-absorbing material further includes a nitrogen silencing sound-absorbing cotton 74 disposed in the nitrogen silencing chamber. The nitrogen silencing sound-absorbing cotton 74 is configured to absorb the sound of the nitrogen airflow in the nitrogen silencing chamber.

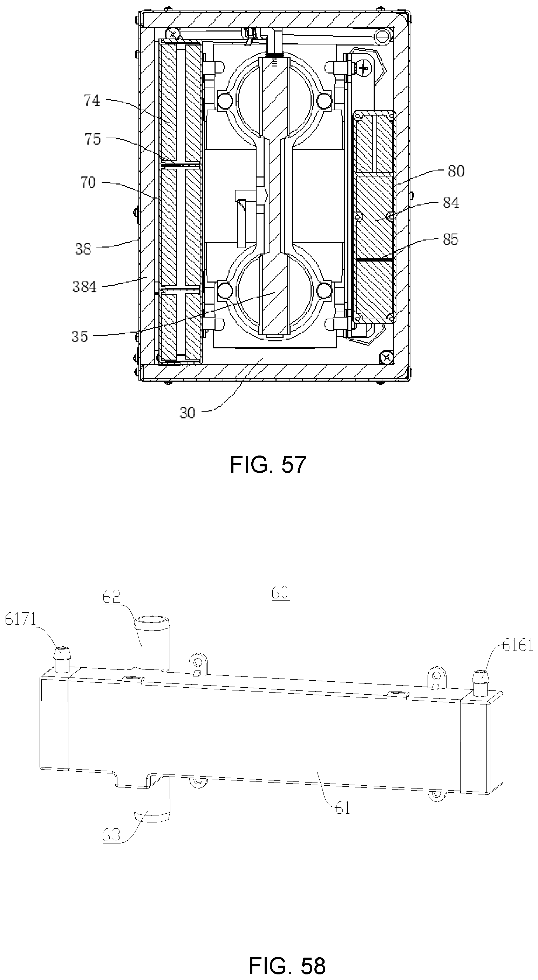

In some embodiments, as shown in FIGs. 52 and 57, at least one intake silencing partition plate 85 is disposed in the intake silencing chamber of the intake silencing device 80. The at least one intake silencing partition plate 85 divides the intake silencing chamber into a plurality of communicating silencing chambers. After the airflow enters the air inlet 81, it passes through the plurality of communicating silencing chambers and then enters the second air intake pipe 39 of the compressor 35 from the air outlet 82. The intake silencing partition plate 85 can affect the path of the airflow and improve the silencing effect on the airflow.

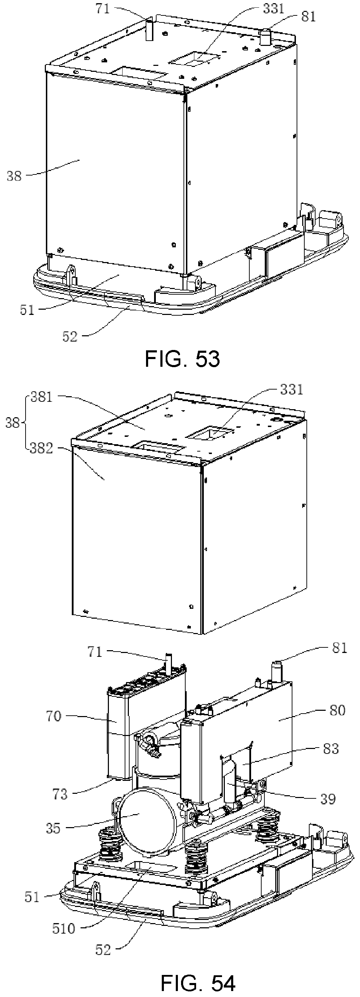

In some embodiments, as shown in FIG. 54, at least one nitrogen silencing partition plate 75 is disposed in the nitrogen silencing chamber. The at least one nitrogen silencing partition plate 75 divides the nitrogen silencing chamber into at least two communicating silencing chambers. After the nitrogen airflow enters the nitrogen inlet 71, it passes through the plurality of communicating silencing chambers and then is discharged from the nitrogen outlet 72. The nitrogen silencing partition plate 75 can affect the path of the airflow and improve the silencing effect on the airflow.

In some embodiments, a grid plate 73 is disposed at the bottom of the nitrogen silencing device 70. A plurality of nitrogen outlets 72 are provided and distributed on the grid plate 73. The opening area of the nitrogen inlet 71 may be less than the total opening area of the plurality of nitrogen outlets 72. The plurality of nitrogen outlets 72 can further provide the silencing effect on the airflow.

In some embodiments, the oxygen generating device 100 is provided with the compressor cover 38, and a silencing structure is disposed in the inner cavity of the compressor cover 38.

As shown in FIGs. 53 and 54, the inner cavity of the compressor cover 38 is the compressor chamber 30. The compressor cover 38 includes a cover top plate 381 and a plurality of cover side plates 382 enclosing the compressor chamber 30.

Further, the bottom of the compressor cover 38 is connected to the exhaust silencing device, and the compressor 35 is connected to the exhaust silencing device. A vibration damping device may be disposed on the exhaust silencing device (e.g., vibration damping springs, buffers). The vibration damping device is arranged between the compressor 35 and the exhaust silencing device, which can buffer the vibration of the compressor 35, thereby reducing the noise generated by the vibration.

In some embodiments, the intake silencing device 80 is fixedly connected to the cover top plate 381 of the compressor cover 38. The air inlet 81 of the intake silencing device 80 forms a first pipe joint extending out of the cover top plate 381, to facilitate the connection of an air pipeline.

In some embodiments, the nitrogen silencing device 70 is fixedly connected to the cover top plate 381 of the compressor cover 38. The nitrogen inlet 71 of the nitrogen silencing device 70 forms a second pipe joint extending out of the cover top plate 381, to facilitate the connection of the nitrogen pipeline.

The intake silencing device 80 and/or the nitrogen silencing device 70 may be connected to the cover top plate 381 by fasteners or other detachable manners.

The intake silencing device 80 and/or the nitrogen silencing device 70 are configured as a flat shape extending towards opposite ends of the compressor 35. This configuration can adapt to the shape of the compressor cover 38, making the internal structure of the compressor cover 38 more compact.

In some embodiments, as shown in FIG. 52, the compressor cover 38 and the exhaust silencing device enclose a third air duct 43. A third air inlet 331 in communication with the third air duct 43 is disposed on the compressor cover 38. The cooling airflow enters the third air duct 43 from the third air inlet 331, takes away the heat from the compressor 35, and then is discharged through the exhaust silencing device.

In one embodiment, the third air duct 43 communicates with the device chamber 20 above it through the third air inlet 331. The airflow in the device chamber 20 can enter the third air duct 43 through the third air inlet 331 to dissipate heat from the compressor 35. In detail, a fan 25 is disposed in the device chamber 20. The fan 25 delivers the airflow in the device chamber 20 into the third air duct 43.

Specifically, the third air inlet 331 is disposed on the cover top plate 381 of the compressor cover 38 and is located between the intake silencing device 80 and the nitrogen silencing device 70, and the third air inlet 331 faces the compressor 35. The intake silencing device 80 and the nitrogen silencing device 70 are disposed on opposite sides of the compressor 35, which can reduce the obstruction to the cooling airflow, allowing the cooling airflow to directly flow from the third air inlet 331 to the central compressor 35, fully dissipating heat from the compressor 35, and ensuring heat dissipation efficiency.

The nitrogen silencing device 70 directly discharges the nitrogen into the third air duct 43. The nitrogen can be discharged along with the cooling airflow through the exhaust silencing channel of the exhaust silencing device.

In some embodiments, as shown in FIG. 52, a sound-absorbing layer is disposed on the compressor cover 38 and/or the exhaust silencing device. The sound-absorbing layer can provide a silencing effect, reducing noise transmission out of the compressor chamber 30. The sound-absorbing layer may be made of sound-absorbing cotton, sound-absorbing foam, or other material layers having a sound-absorbing effect.

In detail, a cover sound-absorbing layer 384 is disposed on the inner wall of the compressor cover 38. The cover sound-absorbing layer 384 is distributed on the cover top plate 381 and the plurality of cover side plates 382 of the compressor cover 38. A first exhaust sound-absorbing cotton 571 is disposed on the top of the exhaust silencing device. The cover sound-absorbing layer 384 and the first exhaust sound-absorbing cotton 571 enclose the compressor chamber 30.

In some embodiments, the oxygen generating device 100 is provided with an air intake pipeline. The air intake pipeline is connected to the air inlet 81 of the intake silencing device 80 within the compressor cover 38 and delivers air to the intake silencing device 80.

In some embodiments, a molecular sieve device is disposed inside the housing 10. The molecular sieve device is located on one side of the device chamber 20 and the compressor chamber 30. The compressor 35 delivers the compressed air to the molecular sieve device, and the molecular sieve device separates oxygen and nitrogen from the air. The compressor 35 may be connected to the molecular sieve device via the heat dissipation tube 351 within the device chamber 20 and may deliver compressed air to the molecular sieve device via the heat dissipation tube 351.

Further, the oxygen generating device 100 is provided with an output pipeline for delivering oxygen. The oxygen separated by the molecular sieve device is delivered via the output pipeline. The nitrogen separated by the molecular sieve device is discharged via a nitrogen pipeline. The nitrogen pipeline is connected to the nitrogen inlet 71 of the nitrogen silencing device 70, thereby delivering the nitrogen into the nitrogen silencing device 70.

In detail, the oxygen generating device 100 is provided with a first air intake pipe 37. The air inlet 81 of the intake silencing device 80 is connected to the first air intake pipe 37. The air intake module of the oxygen generating device 100 is configured to deliver air to the intake silencing device 80 via the first air intake pipe 37.

Regarding noise from the compressor chamber 30, the intake silencing device 80 reduces noise of an intake airflow of the compressor 35, the nitrogen silencing device 70 reduces noise of a nitrogen airflow discharged from the molecular sieve device, the compressor cover 38 reduces noise transmission, and the exhaust silencing device performs overall silencing for the discharged cooling airflow and nitrogen, thereby effectively reducing noise of the oxygen generating device and providing a quiet oxygen-using environment for a user when the oxygen generating device is operating.

In some embodiments of the present disclosure, the oxygen generating device 100 comprises the water-free humidification module 60.

Referring to FIGs. 58-65, the water-free humidification module 60 utilizes moisture in the air to humidify oxygen outputted by the oxygen generating device 100. At the same time, it can dehumidify an incoming oxygen generation gas. A portion of the moisture in the oxygen generation gas enters the oxygen, thereby achieving humidification for the oxygen and dehumidification for the oxygen generation gas.

The present disclosure describes the water-free humidification module 60 in detail by way of the following embodiments.

In an embodiment of the present disclosure, referring to FIGs. 58-62 and 65, the water-free humidification module 60 comprises: a housing body 61, an air inlet pipe 62, an air outlet pipe 63, and a humidification conduit 64. An air inlet chamber 611 and an air outlet chamber 612 are disposed within the housing body 61.

The air inlet pipe 62 and the air outlet pipe 63 are respectively disposed on the air inlet chamber 611 and the air outlet chamber 612 and are located at the same end of the housing body 61. In the conventional water-free humidification module, due to the bidirectional symmetrical structural arrangement of the compressor gas path and the oxygen gas path, the two ends need to be connected separately during pipeline connection, which results in complexity in spatial arrangement and inconvenience in pipeline connection. The present disclosure, by arranging the air intake pipe 62 and the air outlet pipe 63 on the same side of the housing body 61, facilitates rapid connection of the air intake pipe 62 and the air outlet pipe 63 to the intake pipeline of the compressor, thereby reducing the internal occupied space, making the structure more compact and simplified.

In the present embodiment, at least a portion of the humidification conduit 64 passes through the air inlet chamber 611, i.e., at least a portion of the humidification conduit 64 is located inside the air inlet chamber 611, and all or a part of a pipe wall of the humidification conduit 64 located inside the air inlet chamber is a water-permeable structure. The pipe wall is a water-permeable structure, allowing moisture to enter an interior through the pipe wall, thereby achieving humidification of oxygen within the humidification conduit 64. At the same time, the air inlet pipe 62 is configured to introduce external air into the air inlet chamber 611, and a portion of moisture in the air penetrates into the humidification conduit 64, thereby causing oxygen within the humidification conduit 64 to be humidified. The air outlet pipe 63 is configured to discharge dehumidified gas from within the air outlet chamber 612. Moisture in external air entering from the air inlet pipe 62 penetrates into the humidification conduit 64 to increase humidity of the oxygen. Meanwhile, dehumidification of gas within the air inlet chamber 611 is achieved. The gas is delivered to the compressor as an oxygen generation gas, thereby facilitating a reduction of moisture entering an oxygen generation system and avoiding corrosion of flowed-through components by the moisture.

In the present embodiment, to enable the air inlet pipe 62 and the air outlet pipe 63 to be located at the same end of the housing body 61, a partition plate 613 is disposed within the housing body 61 for separating the air inlet chamber 611 and the air outlet chamber 612. A through opening 614 is formed on the partition plate 613 for communicating the air inlet chamber 611 with the air outlet chamber 612. The air inlet pipe 62 and the air outlet pipe 63 are located on the same side of the through opening 614. By providing the partition plate 613, a change in direction of gas flow after passing through the through hole 614 is achieved, thereby enabling the air inlet pipe 62 and the air outlet pipe 63 to be located at the same end of the housing body 61.

In some embodiments, a cross-sectional area of the air inlet chamber 611 is larger than a cross-sectional area of the air outlet chamber 612. The air inlet chamber 611 achieves dehumidification for gas and humidification for oxygen within the humidification conduit 64. The air outlet chamber 612 is primarily configured to deliver the gas to the air outlet pipe 63. A flow direction of gas within the air inlet chamber 611 is opposite to a flow direction of gas within the air outlet chamber 612. This allows the gas to flow within the air inlet chamber 611 in a direction away from the air inlet pipe 62 to increase contact area and contact time with the humidification conduit 64, thereby achieving a better humidifying effect for the oxygen. Thereafter, the gas enters the air outlet chamber 612 through the through opening 614, and flows in a direction towards the air outlet pipe 63. The gas within the air inlet chamber 611 refers to the gas entering from the air inlet pipe 62.

In some embodiments, the air outlet chamber 612 is filled with sound-absorbing cotton and/or filter cotton for achieving silencing and filtration for gas. The water-permeable structure is a fiber membrane, and moisture can penetrate through the fiber membrane.

In some embodiments, a flow direction of gas within the air inlet chamber 611 is opposite to an oxygen flow direction within the humidification conduit 64, allowing more moisture to enter an interior through a pipe wall of the humidification conduit 64.

In some embodiments, the air inlet pipe 62 and the air outlet pipe 63 are coaxially disposed and located at a side portion of the housing body 61. A housing body air inlet 6191 is provided at a communication portion between the air inlet pipe 62 and the air inlet chamber 611. A housing body air outlet 6192 is provided at a communication portion between the air outlet pipe 63 and the air outlet chamber 612.

In some embodiments, a housing body air inlet 6191 connected to the air inlet pipe 62 is formed on a housing body wall 619 of the housing body 61. The housing body air inlet 6191 is disposed parallel to an axis of the air inlet pipe 62. A dimension of the housing body air inlet 6191 in an axial direction of the air inlet pipe 62 is the same as an internal height of the air inlet chamber 611. Thus, the gas delivered by the air intake pipe 62 can enter the air inlet chamber 611 through the housing air inlet 6191 and then fill the interior of the air inlet chamber 611 in the height direction before flowing inside the air inlet chamber 611. This is beneficial for increasing the contact area between the gas and the humidification conduit 64. Preferably, the through opening 614 and the air inlet pipe 62 are located at two ends of the housing body 61. The housing body air inlet 6191 is disposed parallel to an axis of the air inlet pipe 62. A dimension of the housing body air inlet 6191 in an axial direction of the air inlet pipe 62 is the same as an internal height of the air inlet chamber 611. This allows gas delivered by the air inlet pipe 62 to enter the air inlet chamber 611 through the housing body air inlet 6191, and then fill an interior of the air inlet chamber 611 in the height direction before flowing inside the air inlet chamber 611. This is beneficial for increasing the contact area between the gas and the humidification conduit 64.

In some embodiments, the housing body air outlet 6192 is disposed parallel to an axis of the air outlet pipe 63. A downwardly protruding groove 6181 is provided on a housing body bottom wall 618 of the housing body 61. The protruding groove 6181 is in communication with the housing body air outlet 6192, and the protruding groove 6181 is connected to an air outlet connecting portion. By providing the protruding groove 6181, an opening area between the air outlet pipe 63 and the air outlet chamber 612 is facilitated to be increased, thereby facilitating timely discharge of gas from the air outlet chamber 612.

In some embodiments, the air inlet pipe 62 and the air outlet pipe 63 are integrally disposed. The partition plate 613 extends outwardly to form a partition plate protrusion 6131 for separating the air inlet pipe 62 and the air outlet pipe 63. The air inlet pipe 62 and the air outlet pipe 63 are coaxially disposed. The integral arrangement of the air inlet pipe 62 and the air outlet pipe 63 is beneficial for increasing structural strength and reducing manufacturing difficulty. Preferably, the housing body 61, the air inlet pipe 62, and the air outlet pipe 63 are integrally formed by injection molding.

In some embodiments, a perforated plate 615 is disposed at each of two ends of the air inlet chamber 611. A plurality of regularly arranged holes are provided on the perforated plate 615, and a plurality of humidification conduits 64 pass through the holes. By providing the perforated plate 615, a support for the humidification conduit 64 is formed.

In some embodiments, an air intake cavity 616 and an air outlet cavity 617 are respectively disposed at two ends of the air inlet chamber 611. A perforated plate 615 is disposed between the air intake cavity 616 and the air inlet chamber 611, and a perforated plate 615 is disposed between the air outlet cavity 617 and the air inlet chamber 611. An air intake nozzle 6161 and an air outlet nozzle 6171 are respectively provided on the air intake cavity 616 and the air outlet cavity 617. The air intake cavity 616 and the air outlet cavity 617 are a portion of the humidification conduit 64. Oxygen enters the air intake cavity 616 through the air intake nozzle 6161, and then reaches the air outlet cavity 617 through the water-permeable structure within the air inlet chamber 611. Humidification for the oxygen is achieved within the air inlet chamber 611.

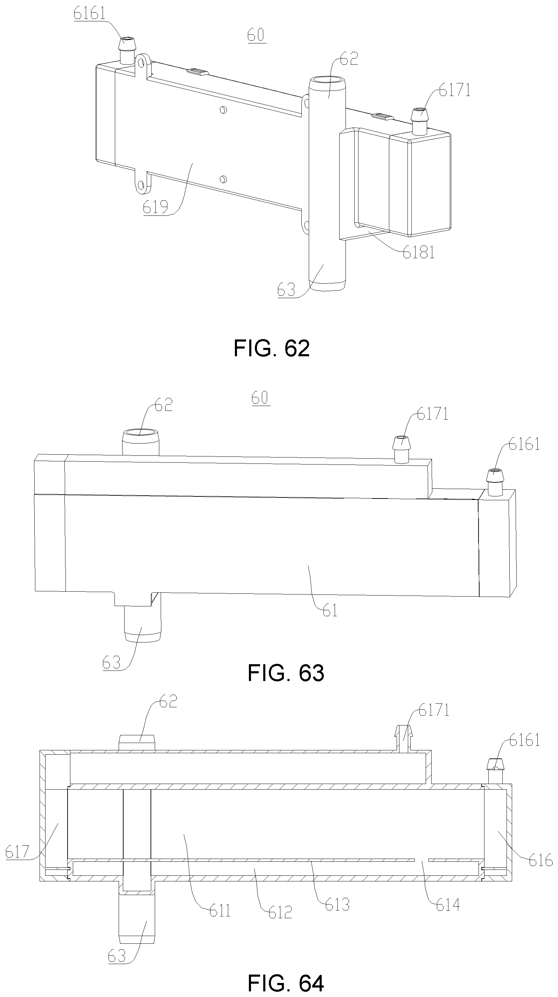

In another embodiment of the present disclosure, referring to FIGs. 63 and 64, a main difference of the water-free humidification module 60 from the above-described embodiment is that an air intake cavity structure is different, while other structures may be the same as those in the above-described embodiment.

In the present embodiment, the water-free humidification module 60 comprises: a housing body 61, an air inlet pipe 62, an air outlet pipe 63, and a humidification conduit. An air inlet chamber 611 and an air outlet chamber 612 are disposed within the housing body 61. The air inlet pipe 62 and the air outlet pipe 63 are respectively disposed on the air inlet chamber 611 and the air outlet chamber 612 and are located at the same end of the housing body 61. In the conventional water-free humidification module, due to the bidirectional symmetrical structural arrangement of the compressor gas path and the oxygen gas path, the two ends need to be connected separately during pipeline connection, which results in complexity in spatial arrangement and inconvenience in pipeline connection. The present disclosure, by arranging the air intake pipe 62 and the air outlet pipe 63 on the same side of the housing body 61, facilitates rapid connection of the air intake pipe 62 and the air outlet pipe 63 to the intake pipeline of the compressor, thereby reducing the internal occupied space, making the structure more compact and simplified.

In the present embodiment, at least a portion of the humidification conduit passes through the air inlet chamber 611, and all or a part of a pipe wall of the humidification conduit located in the air inlet chamber is a water-permeable structure. The pipe wall is a water-permeable structure, allowing moisture to enter an interior through the pipe wall, thereby achieving humidification of oxygen within the humidification conduit 64. At the same time, the air inlet pipe 62 is configured to introduce external air into the air inlet chamber 611, and a portion of moisture in the air penetrates into the humidification conduit, thereby causing oxygen within the humidification conduit to be humidified.

In some embodiments, an air intake cavity 616 and an air outlet cavity 617 are disposed within the housing body 61. An air intake nozzle 6161 and an air outlet nozzle 6171 are respectively provided on the air intake cavity 616 and the air outlet cavity 617. The air intake cavity 616 and the air outlet cavity 617 are a portion of the humidification conduit. Oxygen enters the air intake cavity 616 through the air intake nozzle 6161, and then reaches the air outlet cavity 617 through the water-permeable structure within the air inlet chamber 611. Humidification for the oxygen is achieved within the air inlet chamber 611.

In some embodiments, in order to facilitate connection of the air inlet nozzle 6161 and the air outlet nozzle 6171 to an oxygen delivery pipeline and to reduce the occupied internal space of the oxygen concentrator, it is preferable that the air inlet nozzle 6161 and the air outlet nozzle 6171 are located at the same end of the housing body (61). The air intake nozzle 6161 and the air outlet nozzle 6171 are disposed at one end of the housing body 61, and the air inlet pipe 62 and the air outlet pipe 63 are located at the other end of the housing body 61, thereby facilitating quick connection of the oxygen supply pipeline and the oxygen delivery pipeline.

In some embodiments, the air intake cavity 616 extends above the air inlet chamber 611, and the air intake nozzle 6161 is disposed close to the air inlet pipe 62.

In some embodiments, the air outlet cavity 617 extends above the air inlet chamber 611, and the air outlet nozzle 6171 is disposed away from the air inlet pipe 62.

The water-free humidification module 60 of the oxygen generating device 100 penetrates moisture in external air into oxygen to increase humidity of the oxygen, and simultaneously achieves dehumidification for the external air.

The oxygen generating device 100 has the output pipeline configured to output oxygen and the above-described water-free humidification module 60. The humidification conduit 64 is connected to the output pipeline of the oxygen and is configured to humidify the outputted oxygen. The oxygen generating device 100 is provided with the oxygen generation air intake pipeline. The air inlet pipe 62 and the air outlet pipe 63 are connected to the oxygen generation air intake pipeline. The air outlet pipe 63 is in communication with an air inlet of the compressor 35 and delivers the dehumidified gas to the compressor 35 for compression processing. Preferably, the water-free humidification module 60 is independently disposed.

In some embodiments of the present disclosure, the water-free humidification module 60 is located below the air intake module and outside the device chamber 20, forming a separate compartment separated from the device chamber 20. Alternatively, a separate compartment is formed on an outer side of the device chamber 20, the separate compartment is separated from the device chamber 20, and the water-free humidification module 60 is located within the separate compartment.

In some embodiments of the present disclosure, the oxygen generation air intake pipeline of the oxygen generating device 100 includes a first air intake pipe 37. The air inlet pipe 62 and the air outlet pipe 63 are connected to the first air intake pipe 37. The air passing through the water-free humidification module 60 enters the intake silencing device 80 via the first air intake pipe 37. The intake silencing device 80 then delivers the air into the compressor 35 via a second air intake pipe 39.

The oxygen generating device 100 of the present disclosure introduces external air via the air intake module. A portion of the introduced air passes from the air intake module through the water-free humidification module 60 and the intake silencing device 80 and is then supplied to the compressor 35 for compression processing. Another portion of the introduced air serves as a cooling airflow. This cooling airflow enters the cooling air duct 40 from the air intake module and dissipates heat from the device chamber 20. Subsequently, the cooling airflow enters the compressor chamber 30 to continue dissipating heat from the compressor 35. The cooling airflow then enters the exhaust silencing device disposed at a bottom of the compressor chamber 30, and after being silenced and noise-reduced by the exhaust silencing device, is discharged out of the oxygen generating device 100, thereby providing a quiet oxygen-using environment for users.

In summary, the present disclosure has the following features in terms of structural arrangement and distribution:
(1) The entire oxygen generating device 100 is layout-configured in terms of functional module division. One side of the device is provided with a molecular sieve device and a gas storage tank. The other side is configured as a three-layer structure (upper, middle, and lower layers). The upper layer is configured with relatively precise electronic control unit components for accommodating corresponding sensing units. The middle layer structure is configured with corresponding switching valves, fans, and an electronic control board (a second circuit board) for accommodating low- voltage structural components. The lower layer structure is configured with a compressor for accommodating high- voltage structural components. Meanwhile, considering the particularity of the water-free humidification module, a further separate regional division is implemented, forming dry-wet separation. Through the aforementioned reasonable arrangement, various safety performance indicators of the entire oxygen generating device 100 are improved.
(2) In conjunction with the aforementioned structural layout, the heat dissipation airflow path of the entire oxygen generating device 100 is further optimized. Considering that electronic components of different power generate different amounts of heat; corresponding matching is performed based on the flow rate provided by the oxygen generating device 100. For example, if a high flow rate is required, corresponding high-power components need to be matched. In this case, the heat generated by the relatively precise electronic control unit components in the upper layer needs to be considered. Therefore, its air intake is set to first pass through the upper layer, then enter the middle layer, and then enter the lower layer. If the flow rate requirement is not high and the matched component power is low, in this case, the heat generated by the relatively precise electronic control unit components in the upper layer can be ignored. Therefore, its air intake is set to directly blow onto the electronic control board (the second circuit board), then enter the lower layer through shunting, with a portion entering the upper layer, thereby forming a heat dissipation path.
(3) In conjunction with the aforementioned structural layout, the silencing manner of the entire device is further optimized. By utilizing the water-free humidification module to realize partial intake silencing for the compressor and dehumidification of the compressor intake air, integrated silencing processing is performed inside the compressor chamber, including an intake and exhaust silencing module and a bottom silencing heat dissipation exhaust module, thereby achieving multi-stage silencing processing for the device and providing a good oxygen inhalation environment for users.
(4) In conjunction with the aforementioned structural layout, the intake filtration method is further optimized. The air intake module, which supplies air to the cooling air duct and the compressor, adopts an integrated design approach. This not only provides an aesthetically pleasing external structure but also achieves multi-stage integrated treatment of the gas. In combination with the partial filtration effect of the water-free humidification module, multi-stage filtration of the complete device is realized, ensuring clean intake air for the compressor and providing high-purity oxygen quality.

Various embodiments of the present disclosure have been described above. The foregoing description is illustrative and not exhaustive and is not limited to the disclosed embodiments. Many modifications and variations will be apparent to one of ordinary skill in the art without departing from the scope and spirit of the described embodiments. The terminology used herein is intended to best explain the principles, practical applications, or technical improvements in the market of the various embodiments, or to enable other persons of ordinary skill in the art to understand the various embodiments disclosed herein. The scope of the present disclosure is defined by the appended claims.

## Claims

1. An oxygen generating device, comprising:
a housing comprising a first sidewall and a second sidewall;
a device chamber disposed within the housing and provided with a second side plate adjacent to the second sidewall;
a compressor chamber disposed within the housing, wherein the compressor chamber internally accommodates a compressor and is located below the device chamber and in communication with the device chamber;
an air intake module disposed on the first sidewall, wherein the air intake module is configured to introduce a cooling airflow into the housing and to supply air to the compressor;
a cooling air duct comprising a first air inlet, a first air duct, a second air duct, and a second air inlet, wherein the first air inlet is disposed on the air intake module for introducing the cooling airflow, the first air duct is connected to the first air inlet and located between a top wall of the housing and a top plate of the device chamber, the second air duct is connected to the first air duct and located between the second sidewall and the second side plate, and the second air inlet is provided on the second side plate and configured to introduce the cooling airflow from the second air duct into the device chamber; and
an exhaust silencing device disposed at a bottom of the compressor chamber, wherein the exhaust silencing device internally forms an exhaust silencing chamber, a silencing air inlet is disposed at a top of the exhaust silencing device to communicate the compressor chamber with the exhaust silencing chamber, and a silencing air outlet is disposed on a bottom of the exhaust silencing device to discharge airflow from the exhaust silencing chamber out of the oxygen generating device.

2. The oxygen generating device according to claim 1, wherein
the air intake module comprises:
an air intake cavity, which is formed by inwardly recessing the housing;
a mounting cavity, which is formed by inwardly recessing a cavity wall opposite to an open end of the air intake cavity;
a filter cavity, which is detachably located within the mounting cavity; and
an intake pipe head, which is in communication with an air inlet of the compressor and extends into the mounting cavity;
wherein the intake pipe head is connected to the filter cavity, a first filter element is provided in the air intake cavity, and a second filter element is provided in the filter cavity;
the first air inlet is disposed at a bottom of the air intake cavity; and
external air enters the air intake cavity and passes through the first filter element; a portion of the air flows into the filter cavity, passes through the second filter element, and enters an oxygen supply pipeline; and another portion of the air flows into the first air inlet and enters the cooling air duct.

3. The oxygen generating device according to claim 2, wherein
the air intake module further comprises an air intake cover detachably covering the open end of the air intake chamber, a first air intake opening for introducing external air is formed between the air intake cover and a cavity wall of the air intake cavity; a projection of the first air intake opening onto the bottom of the air intake cavity is spaced apart from both the filter cavity and the first air inlet, forming a hidden air inlet structure.

4. The oxygen generating device according to claim 1, wherein
a first circuit board is disposed within the first air duct, the first circuit board is fixedly provided on the top plate of the device chamber; a plane of the top plate of the device chamber is lower than the first air inlet;
a second circuit board is disposed within the device chamber, a heat dissipation amount of a plurality of first electronic components disposed on the first circuit board is less than a heat dissipation amount of a plurality of second electronic components disposed on the second circuit board; and
a panel frame is disposed obliquely between the top plate and the second sidewall of the housing, a control panel is mounted on the panel frame, the panel frame is inclined away from the second sidewall in an upward direction; and an inner side of the panel frame serves to guide a flowing airflow.

5. The oxygen generating device according to claim 1, wherein
a molecular sieve device is disposed inside the housing, the molecular sieve device is located on one side of the device chamber and the compressor chamber; a heat dissipation tube connected to the compressor and configured to deliver compressed gas to the molecular sieve device is provided in the device chamber, and the heat dissipation tube is disposed on an inner side of the second air inlet.

6. The oxygen generating device according to claim 1, wherein
the exhaust silencing device comprises:
a bottom cover, wherein the silencing air inlet is provided at a top of the bottom cover;
a bottom shell, forming a recessed bottom shell groove, one end of the bottom shell groove forming the silencing air outlet; and
an exhaust hood disposed in the bottom shell groove, wherein one end of the exhaust hood extends to the silencing air outlet, and the other end of the exhaust hood forms a perforated portion;
wherein the bottom cover is connected to the bottom shell and covers the bottom shell groove, a first exhaust silencing chamber in communication with the silencing air inlet is formed between an outer side of the exhaust hood and the bottom cover, and a second exhaust silencing chamber in communication with the silencing air outlet is formed between an inner side of the exhaust hood and the bottom shell.

7. The oxygen generating device according to claim 6, wherein
the silencing air inlet comprises a first silencing air inlet and a second silencing air inlet respectively proximate to two opposite ends of the bottom cover, the first silencing air inlet is proximate to the silencing air outlet of the bottom shell, the second silencing air inlet is proximate to the perforated portion of the exhaust hood; an opening area of the first silencing air inlet is larger than an opening area of the second silencing air inlet; and/or
the perforated portion is distributed on a top surface and a side surface of the exhaust hood, a groove gap is formed between the side surface of the exhaust hood and a side wall of the bottom shell groove, and the groove gap is in communication with the first exhaust silencing chamber; and/or
at least one of an interior of the first exhaust silencing chamber, an interior of the second exhaust silencing chamber, or a top surface of the bottom cover is provided with an exhaust sound-absorbing cotton.

8. The oxygen generating device according to claim 1, wherein a water-free humidification module is further disposed inside the housing, and the water-free humidification module comprises:
a housing body, in which an air inlet chamber and an air outlet chamber are disposed;
an air inlet pipe and an air outlet pipe, which are respectively disposed on the air inlet chamber and the air outlet chamber, and located at a same end of the housing body;
a humidification conduit, at least a portion of which passes through the air inlet chamber, wherein all or a part of a pipe wall of the humidification conduit located in the air inlet chamber is a water-permeable structure; and
a partition plate, which is disposed in the housing body to separate the air inlet chamber and the air outlet chamber, the partition plate having a through opening for communicating the air inlet chamber with the air outlet chamber.

9. The oxygen generating device according to claim 8, wherein
the water-free humidification module is located below the air intake module and outside the device chamber, forming a separate compartment; the air inlet pipe and the air outlet pipe are in communication with an air intake pipeline of the oxygen generating device, and the humidification conduit is in communication with an oxygen delivery pipeline of the oxygen generating device; and/or
the air inlet pipe and the air outlet pipe are coaxially disposed and located at a side portion of the housing body, and an air inlet and an air outlet are respectively provided at a communication portion between the air inlet pipe and the air inlet chamber and a communication portion between the air outlet pipe and the air outlet chamber; and the through hole and the air inlet pipe are located at two ends of the housing body; and/or
a sound-absorbing cotton or a filter cotton is filled in the air outlet chamber, and the water-permeable structure is a fiber membrane.

10. The oxygen generating device according to any one of claims 1-9, wherein
a silencing assembly is disposed in the compressor chamber, and the silencing structure comprises:
an intake silencing device, which is disposed on a side of the compressor connected to a second air intake pipe and provided with a clearance recess for avoiding the second air intake pipe, wherein the intake silencing device internally forms an intake silencing chamber and is provided with an air intake and an air outlet in communication with the intake silencing chamber, the air outlet is disposed in the clearance recess and connected to the second air intake pipe; and
a nitrogen silencing device, which is disposed on the other side of the compressor, internally forms a nitrogen silencing chamber, and provided with a nitrogen inlet and a nitrogen outlet in communication with the nitrogen silencing chamber.
